# EUROPÄISCHE PATENTSCHRIFT

(11) **EP 4 242 616 B1**
(45) Veröffentlichungstag und Bekanntmachung des Hinweises auf die Patenterteilung: **02.04.2025**
(21) Anmeldenummer: 23188632.6
(22) Anmeldetag: 26.08.2020
(51) Int. Cl.: G01L 3/10, B62D 6/10, G01L 5/22

(54) **DREHMOMENTSENSORVORRICHTUNG, FLUSSLEITERANORDNUNG UND FLUSSLEITER**
TORQUE SENSOR DEVICE, FLUX GUIDE ASSEMBLY, AND FLUX GUIDE
DISPOSITIF DE CAPTEUR DE COUPLE, ENSEMBLE DE CONDUCTEUR DE FLUX ET CONDUCTEUR DE FLUX

(43) Veröffentlichungstag der Anmeldung: 13.09.2023
(62) Teilanmeldung aus: 20192858.7
(73) Patentinhaber: Valeo Schalter und Sensoren GmbH, 74321 Bietigheim-Bissingen (DE)
(72) Erfinder: Froehlich, Ekkehart, 74321 Bietigheim-Bissingen (DE); Thom, Jens, 74321 Bietigheim-Bissingen (DE); Pachakkil, Sageesh, 74321 Bietigheim-Bissingen (DE)
(74) Vertreter: Ralf, Thorge

(56) Entgegenhaltungen:
- EP-B1- 3 931 065
- DE-A1- 102012 014 208
- US-A1- 2011 221 432

## Beschreibung

Die Erfindung betrifft eine Drehmomentsensorvorrichtung zur Erfassung eines auf eine Welle aufgebrachten Drehmoments, insbesondere zur Erfassung eines auf eine Lenkwelle eines Kraftfahrzeugs aufgebrachten Drehmoments, wobei die Drehmomentsensorvorrichtung eine Magnetanordnung, eine Statoranordnung und eine Flussleiteranordnung aufweist.

Des Weiteren betrifft die Erfindung einen Flussleiteranordnung für eine Drehmomentsensorvorrichtung.

Ferner betrifft die Erfindung einen Flussleiter für eine Drehmomentsensorvorrichtung und/oder für eine Flussleiteranordnung für eine Drehmomentsensorvorrichtung.

Gattungsgemäße Drehmomentsensorvorrichtungen, insbesondere für Lenkwellen von Kraftfahrzeugen, sind aus dem Stand der Technik grundsätzlich bekannt, beispielsweise aus der DE 10 2013 006 379 A1 oder der EP 1 269 133 B1.

Derartige Drehmomentsensorvorrichtungen werden beispielsweise bei elektrischen Lenksystemen eingesetzt, um den elektrischen Antriebsmotor des Lenksystems basierend auf einem von einem Fahrer aufgebrachten Lenkmoment anzusteuern, beispielsweise um eine entsprechende Lenkunterstützung bereitzustellen.

In der Regel werden Drehmomentsensorvorrichtungen dazu in Verbindung mit einer axial geteilten Welle und mit einem Torsionsstab mit definierter, bekannter Torsionssteifigkeit eingesetzt, wobei der Torsionsstab dabei einen ersten Teil der axial geteilten Welle mit einem zweiten Teil der axial geteilten Welle verbindet.

Wird ein Drehmoment auf die Welle aufgebracht, bewirkt dies eine Verdrehung der beiden Teile der Welle zueinander um einen messbaren Verdrehwinkel, wobei der Verdrehwinkel sich abhängig vom aufgebrachten Drehmoment und der Steifigkeit des Torsionsstabes einstellt, so dass aus dem erfassten Verdrehwinkel bei definierter, bekannter Steifigkeit des Torsionsstabes das aufgebrachte Drehmoment ermittelt werden kann.

Zur Messung des infolge eines aufgebrachten Drehmoments resultierenden Verdrehwinkels sind verschiedene Messprinzipien und Sensoranordnungen bekannt, wobei sehr häufig magnetische Sensorvorrichtungen oder -systeme zum Einsatz kommen, bei denen eine Magnetanordnung mit wenigstens einem Magnetelement, meistens mit einem umlaufenden, als Permanentmagnet ausgebildeten Ringmagneten, mit dem ersten Teil der Lenkwelle drehfest verbunden ist, und eine Statoranordnung mit einem oder mehreren, magnetisch leitfähigen Statoren drehfest mit dem zweiten Teil der Welle verbunden ist, wobei die Statoranordnung dabei in der Regel in radialer Richtung mit einem kleinen Luftspalt dazwischen konzentrisch um die Magnetanordnung, insbesondere das Magnetelement, herum angeordnet ist. Über die Statoranordnung, welche üblicherweise zwei separate Statoren mit jeweils einem ringscheibenförmigen Bereich umfasst, kann der magnetische Fluss eines mittels der Magnetanordnung erzeugten Magnetfeldes zu einer Magnetsensoranordnung mit wenigstens einem Magnetsensor, beispielsweise einem Hall-Sensor, geleitet werden und ausgewertet werden.

Wird die drehfest mit dem ersten Teil der Welle verbundene Magnetanordnung, insbesondere deren Magnetelement, durch eine Rotationsbewegung der Welle relativ zu der mit dem zweiten Teil der Welle verbundenen Statoranordnung bewegt, ändert sich die magnetische Flussdichte in der Statoranordnung, insbesondere in den einzelnen Statoren, was mittels der Magnetsensoranordnung erfasst werden kann. Die Änderung der magnetischen Flussdichte in der Statoranordnung ist dabei unter anderem abhängig von der Größe der Relativbewegung der Magnetanordnung, insbesondere der jeweiligen Magnetelemente, gegenüber der Statoranordnung, insbesondere gegenüber den einzelnen Statoren, d.h. vom Verdrehwinkel. Somit kann aus der Änderung der erfassten Flussdichte auf den Verdrehwinkel geschlossen werden und aus dem Verdrehwinkel wiederum kann mit Kenntnis der Torsionssteifigkeit des Torsionsstabs das auf die Welle aufgebrachte Drehmoment bestimmt werden.

Durch eine Überlagerung des von der Magnetanordnung der Drehmomentsensorvorrichtung erzeugten Magnetfelds mit einem weiteren Magnetfeld, das für das Magnetfeld der Sensorvorrichtung ein magnetisches Störfeld darstellt, beispielsweise einem Magnetfeld einer weiteren Sensorvorrichtung oder einem in der Umgebung der Drehmomentsensorvorrichtung vorhandenen Magnetfeld, beispielsweise einem Magnetfeld einer in der Nähe befindlichen, elektrischen Maschine, wie beispielsweise das Magnetfeld eines Elektromotors oder Generators, oder von Hochstromleitungen, kann es zu einer unerwünschten Beeinflussung des an die Magnetsensoreinrichtung übertragenen Flusses kommen, insbesondere zu einer durch das weitere Magnetfeld erzeugten Änderung der übertragenen Flussdichte, was zu einem falschen, jedoch plausiblen und damit nicht als fehlerhaft erkannten Sensorsignal führt und infolgedessen zu einem falschen Drehmomentwert.

Zur Reduzierung der Störempfindlichkeit vorbeschriebener, gattungsgemäßer Drehmomentsensorvorrichtungen sind aus dem Stand der Technik verschiedene Maßnahmen bekannt.

Die US 2016/0091574 A1 schlägt zur Kompensation einer durch ein Magnetfeld einer weiteren Sensorvorrichtung verursachten Störung, dem sogenannten "Übersprechen", beispielsweise vor, wenigstens ein zusätzliches Magnetelement vorzusehen, dass symmetrisch zum Magnetelement der weiteren Sensorvorrichtung angeordnet ist, um den Einfluss des Magnetfeldes des Magnetelements der weiteren Sensorvorrichtung auf die eigentliche Sensorvorrichtung zu kompensieren. Dies setzt jedoch insbesondere die Kenntnis der Richtung des störenden Magnetfeldes voraus.

Aus der WO 2020/035262 A1 ist beispielsweise eine Drehmomentsensorvorrichtung zur Erfassung eines auf eine Welle aufgebrachten Drehmoments bekannt, welche eine Statoranordnung, eine Magnetanordnung und eine Magnetsensoranordnung aufweist, wobei die Magnetanordnung und die Statoranordnung derart ausgebildet und relativ zueinander angeordnet sind, dass durch eine Relativbewegung zwischen der Magnetanordnung und der Statoranordnung in Umfangsrichtung ein erster magnetischer Fluss mit einer ersten magnetischen Flussrichtung erzeugbar ist und ein zweiter magnetischer Fluss mit einer der ersten Flussrichtung entgegengesetzten zweiten Flussrichtung, wobei die Magnetsensoranordnung ein ersten Magnetsensor umfasst zum Erfassen des ersten magnetischen Flusses und einen zweiten Magnetsensor zum Erfassen des zweiten magnetischen Flusses.

Die DE 10 2007 057 050 A1 offenbart eine Sensoranordnung mit relativ geringer Störanfälligkeit zur Messung eines an einer Welle angreifenden Drehmoments, wobei die Welle ein ersten Wellenabschnitt und einen zweiten Wellenabschnitt aufweist und diese beiden Wellenabschnitte gegeneinander verdrehbar sind, mit wenigstens einem auf dem ersten Wellenabschnitt angeordneten magnetischen Encoder und einem auf dem zweiten Wellenabschnitt angeordneten Stator, wobei der Stator zwei Statorelemente mit jeweils abragenden Fingern aufweist, wobei auf dem zweiten Wellenabschnitt mindestens ein zusätzlicher zweiter Stator mit ebenfalls zwei Statorelementen, die jeweils abragende Finger aufweisen, angeordnet ist und diese Statoren dem magnetischen Encoder zugeordnet sind.

Des Weiteren ist aus der DE 10 2018 112 930 A1 eine Ermittlungsvorrichtung zum Ermitteln eines Lenkmoments einer Lenkvorrichtung eines Fahrzeugs bekannt, welche eine Lenkwelle mit einem ersten Wellenabschnitt und einem den ersten Wellenabschnitt koaxial nachgeordneten und verdrehbar mit dem ersten Wellenabschnitt mechanisch wirkverbundenen zweiten Wellenabschnitt aufweist, wobei die Ermittlungsvorrichtung ferner ein Magnetelement aufweist zum Erzeugen eines Magnetfelds sowie ein Magnetfeldaufnahmeelement zum Wegleiten und Zuleiten von Magnetfeldlinien des Magnetfelds vom bzw. zum Magnetelement, wobei ferner das Magnetelements drehfest am ersten Wellenabschnitt und das Magnetfeldaufnahmeelement drehfest am zweiten Wellenabschnitt angeordnet sind, wobei die Ermittlungsvorrichtung zumindest ein Magnetleitelement aufweist, das zum Bilden eines zumindest teilweise geschlossenen Magnetfeldkreises mit einer Magnetfeldflussrichtung mit dem Magnetaufnahmeelement über eine erste Magnetflussverbindung und eine zweite Magnetflussverbindung magnetkommunizierend verbunden ist, wobei in der ersten Magnetflussverbindung ein erster Magnetsensor und in der zweiten Magnetflussverbindung ein zweiter Magnetsensor angeordnet ist, und wobei die Magnetfeldflussrichtung durch den ersten Magnetsensor in der ersten Magnetflussverbindung unterschiedlich ist zu der Magnetfeldflussrichtung des zweiten Magnetsensors in der zweiten Magnetflussverbindung.

Die DE 10 2012 014208 A1 offenbart eine Vorrichtung für ein Kraftfahrzeug, mit einer Drehmomentsensoreinrichtung zur Erfassung eines auf eine Lenkwelle des Kraftfahrzeugs aufgebrachten Drehmoments. Magnetsensoren werden in Einschubschächte eingeschoben, wobei die Einschubschächte zwischen Übertragungsbereichen zweier Flussleiter ausgebildet sind.

Vor diesem Hintergrund ist es eine Aufgabe der Erfindung, eine alternative, insbesondere verbesserte, Drehmomentsensorvorrichtung bereitzustellen, insbesondere eine Drehmomentsensorvorrichtung mit einem verringerten Einfluss wenigstens eines, in der Umgebung der Drehmomentsensorvorrichtung vorhandenen, externen magnetischen Störfeldes auf einen zu bestimmenden Drehmomentwert. Eine weitere Aufgabe ist es, eine alternative, insbesondere verbesserte, Flussleiteranordnung sowie einen alternativen, insbesondere verbesserten Flussleiter bereitzustellen, insbesondere eine Flussleiteranordnung sowie einen Flussleiter, mittels welchen ein Einfluss wenigstens eines, in der Umgebung der Drehmomentsensorvorrichtung vorhandenen, externen magnetischen Störfeldes auf einen zu bestimmenden Drehmomentwert reduziert werden kann.

Diese Aufgabe wird durch eine erfindungsgemäße Drehmomentsensorvorrichtung mit den Merkmalen gemäß dem unabhängigen Patentanspruch gelöst. Vorteilhafte Ausführungen der Erfindung sind Gegenstand der abhängigen

Patentansprüche der Beschreibung und der Figuren und werden im Folgenden näher erläutert.

Eine erfindungsgemäße Drehmomentsensorvorrichtung zur Erfassung eines auf eine Welle aufgebrachten Drehmoments, insbesondere zur Erfassung eines auf eine Lenkwelle eines Kraftfahrzeugs aufgebrachten Drehmoments weist eine Magnetanordnung, eine Statoranordnung und eine Flussleiteranordnung auf, wobei die Magnetanordnung zum Erzeugen wenigstens eines Nutz-Magnetfeldes ausgebildet ist und die Magnetanordnung und die Statoranordnung durch Aufbringen eines Drehmoments derart in Umfangsrichtung um eine Zentrumsachse der Drehmomentsensorvorrichtung relativ zueinander bewegbar sind, dass durch die Relativbewegung zwischen der Magnetanordnung und der Statoranordnung in Umfangsrichtung in der Statoranordnung in Abhängigkeit von dem auf die Drehmomentsensorvorrichtung aufgebrachten Drehmoment ein magnetischer Nutz-Fluss erzeugbar ist. In der Statoranordnung kann ferner in Abhängigkeit von einem die Drehmomentsensorvorrichtung umgebenden Stör-Magnetfeld ein erster magnetischer Stör-Fluss erzeugt werden.

Die Flussleiteranordnung ist dabei insbesondere zur zumindest teilweisen Bündelung und zur Weiterleitung, und vorzugsweise auch zur Verstärkung, eines magnetischen Flusses, insbesondere des in der Statoranordnung erzeugten magnetischen Flusses, an eine Magnetsensoranordnung ausgebildet, wobei die Flussleiteranordnung einen ersten Flussleiter und einen zweiten Flussleiter aufweist, wobei der erste Flussleiter und der zweite jeweils eine erste Sammelfläche sowie jeweils wenigstens eine Übertragungsfläche aufweisen, wobei die ersten Sammelflächen jeweils ausgebildet sind zur zumindest teilweisen Bündelung und/oder zur zumindest teilweisen Weiterleitung eines in der Statoranordnung in Abhängigkeit von einem aufgebrachten Drehmoment erzeugten magnetischen Nutz-Flusses und/oder eines in Abhängigkeit von einem die Drehmomentsensorvorrichtung umgebenden Stör-Magnetfeld erzeugten ersten magnetischen Stör-Flusses.

Die wenigstens eine Übertragungsfläche des ersten Flussleiters und die wenigstens eine Übertragungsfläche des zweiten Flussleiters sind derart gegenüberliegend angeordnet, dass sie einen axialen Spalt zwischen sich bilden, in dem wenigstens ein Magnetsensor einer Magnetsensoranordnung anordbar ist, wobei über die wenigstens eine Übertragungsfläche des ersten Flussleiters ein im ersten Flussleiter erster magnetischer Fluss an einen in dem axialen Spalt angeordneten Magnetsensor einer Magnetsensoranordnung übertragbar ist, wobei der erste magnetische Fluss insbesondere einen Nutz-Fluss-Anteil und/oder einen ersten Stör-Fluss-Anteil enthalten kann, und über die wenigstens eine Übertragungsfläche des zweiten Flussleiters ein im zweiten Flussleiter gebündelter, zweiter magnetischer Fluss an den Magnetsensor übertragbar ist.

Eine erfindungsgemäße Drehmomentsensorvorrichtung ist dadurch gekennzeichnet, dass der zweite Flussleiter ferner eine mit der wenigstens einen Übertragungsfläche des zweiten Flussleiters magnetisch leitend gekoppelte, zweite Sammelfläche aufweist, die zur Erzeugung bzw. zur zumindest teilweisen Bündelung und Weiterleitung eines zweiten magnetischen Stör-Flusses in Abhängigkeit von einem die Drehmomentsensorvorrichtung umgebenden Stör-Magnetfeld ausgebildet ist, wobei der erste Flussleiter und der zweite Flussleiter jeweils derart ausgebildet und derart relativ zueinander angeordnet sind, dass sich, wenn die Drehmomentsensorvorrichtung von einem Stör-Magnetfeld umgeben ist, ein in der ersten Sammelfläche des ersten Flussleiters zumindest teilweise gebündelter und über die wenigstens eine Übertragungsfläche des ersten Flussleiters an den Magnetsensor übertragener erster Stör-Fluss-Anteil des ersten magnetischen Flusses, und ein in der zweiten Sammelfläche des zweiten Flussleiters zumindest teilweise gebündelter und über die wenigstens eine Übertragungsfläche des zweiten Flussleiters an den Magnetsensor übertragener zweiter Stör-Fluss-Anteil des zweiten magnetischen Flusses zumindest teilweise aufheben, insbesondere in dem von den Übertragungsflächen gebildeten Spalt.

Mittels einer derartigen Flussleiteranordnung mit wenigstens einem Flussleiter mit zwei Sammelflächen kann jeweils ein durch ein Stör-Magnetfeld erzeugter und in der Flussleiteranordnung gebündelter, magnetischer Fluss, der zu einer unerwünschten Beeinflussung bzw. Verfälschung eines von der Drehmomentsensorvorrichtung erzeugten Drehmomentsensorsignals führt bzw. führen würde, reduziert bzw. bei entsprechender Ausgestaltung der Flussleiteranordnung und einem entsprechend ausgebildeten externen Stör-Magnetfeld, d.h. bei einem entsprechend insbesondere hinsichtlich seiner Richtung ausgebildeten, die Drehmomentsensorvorrichtung umgebenden Stör-Magnetfeld, sogar vollständig eliminiert werden. Und dies insbesondere ohne einen zweiten, zwingend erforderlichen Magnetsensor und/oder ein zweites Magnetelement und/oder ohne einen zusätzlichen Stator, wie es die vorstehend beispielhalber genannten Lösungen aus dem Stand der Technik beispielsweise vorschlagen.

Vielmehr ermöglicht die vorliegende Erfindung bereits nur durch die zwei Flussleiter eine Reduzierung sowie in einigen Fällen sogar eine vollständige Kompensation eines durch ein externes Stör-Magnetfeld erzeugten und in der Flussleiteranordnung gebündelten, magnetischen (ersten) Stör-Flusses. Die Reduzierung bzw. Kompensation dieses (ersten) Stör-Flusses kann dabei insbesondere durch eine vorteilhafte Ausgestaltung der beiden Flussleiter in Verbindung mit einer vorteilhaften Anordnung der beiden Flussleiter relativ zueinander erreicht werden, insbesondere über die Lage und Orientierung der Sammelfläche(n) und/oder Übertragungsflächen der beiden Flussleiter jeweils innerhalb eines Flussleiters zueinander sowie durch die Ausgestaltung, Lage und Orientierung der beiden Flussleiter relativ zueinander, wobei über die Lage und/oder Orientierung der Sammelfläche(n) und/oder Übertragungsflächen der beiden Flussleiter insbesondere die Richtung eines durch das Stör-Magnetfeld erzeugten und von den Flussleitern gebündelten und über die Übertragungsflächen übertragenen Stör-Fluss-Anteils beeinflusst werden kann.

Insbesondere durch eine vorteilhafte Anordnung der beiden Sammelflächen sowie der Übertragungsfläche des zweiten Flussleiters relativ zu der wenigstens einen Übertragungsfläche und der Sammelfläche des ersten Flussleiters lässt sich, insbesondere in Verbindung mit einer vorteilhaften Abstimmung der Größen der Sammelflächen, ein durch ein umgebendes Stör-Magnetfeld erzeugter Stör-Fluss-Anteil reduzieren und in einigen Fällen sogar vollständig kompensieren.

Damit ermöglicht die vorliegende Erfindung die Bereitstellung einer besonders einfach aufgebauten und damit kostengünstigen, robusten Drehmomentsensorvorrichtung insbesondere die Bereitstellung einer einfachen und kostengünstigen, gegen äußere Stör-Magnetfelder in der Umgebung der Sensorvorrichtung vorhandene Streu-Magnetfelder robusten Drehmomentsensorvorrichtung.

Drehmomentsensorvorrichtungen zur Erfassung eines auf eine Welle aufgebrachten Drehmoments, insbesondere zur Erfassung eines auf eine Lenkwelle eines Kraftfahrzeugs aufgebrachten Drehmoments, insbesondere deren Aufbau und Funktionsweise sind einem zuständigen Fachmann aus dem Stand grundsätzlich bekannt. Insbesondere aus der DE 10 2013 006 379 A1 oder der EP 1 269 133 B1, auf die hiermit für weitere Informationen zur grundsätzlichen Funktionsweise und zum grundsätzlichen Aufbau einer erfindungsgemäßen Drehmomentsensorvorrichtung ausdrücklich verwiesen wird.

Bevorzugt ist eine erfindungsgemäße Drehmomentsensorvorrichtung dabei zur Erfassung eines auf eine Welle aufgebrachten Drehmoments ausgebildet, wobei die Welle einen ersten Teil und einen, relativ zum ersten Teil verdrehbaren, zweiten Teil aufweist und insbesondere der erste Teil und der zweite Teil der Welle mittels eines Torsionsstabs miteinander verbunden sind. Bevorzugt ist eine erfindungsgemäße Drehmomentsensorvorrichtung dabei dazu ausgebildet, die Verdrehung des ersten Teils der Welle gegenüber dem zweiten Teil der Welle zu erfassen. Mit Kenntnis der Torsionssteifigkeit des Torsionsstabs der Welle kann aus der erfassten Verdrehung der Welle das aufgebrachte Drehmoment ermittelt werden.

Bevorzugt weist die Magnetanordnung wenigstens ein Magnetelement zum Erzeugen wenigstens eines Magnetfeldes auf und ist, insbesondere das wenigstens eine Magnetelement der Magnetanordnung, insbesondere konzentrisch zur Welle anordbar, d.h. derart, dass die Zentrumsachse der Drehmomentsensorvorrichtung mit der Rotationsachse der Welle fluchtet, wobei die Magnetanordnung, insbesondere das wenigstens eine Magnetelement der Magnetanordnung insbesondere mit einem ersten Teil der Welle drehfest verbindbar ist.

In einer vorteilhaften Ausgestaltung einer erfindungsgemäßen Drehmomentsensorvorrichtung ist insbesondere eine Polung der Magnetanordnung, insbesondere des wenigstens einen Magnetelements, in axialer Richtung konstant. Hierdurch lässt sich das Magnetelement besonders einfach herstellen und damit kostengünstig.

Das wenigstens eine Magnetelement der Magnetanordnung ist dabei vorzugsweise ein Permanentmagnet, insbesondere ein vollständig geschlossener Ringmagnet oder ein ringmagnetähnlicher, in Umfangsrichtung nahezu geschlossener Magnet, wobei das Magnetelement insbesondere mehrere Ringmagnetsegmente gegensätzlicher Polung oder entsprechenden Polpaaren aufweisen kann, die in Umfangsrichtung jeweils mit entgegengesetzter Polung aneinandergrenzend angeordnet sind, wobei insbesondere zwei aneinander angrenzende Abschnitte entgegengesetzter Polung ein Polpaar bilden.

Weist die Magnetanordnung ein oder mehrere weitere Magnetelemente auf, sind diese besonders bevorzugt ebenfalls wie vorbeschrieben ausgebildet und insbesondere konzentrisch zu dem wenigstens einen Magnetelement angeordnet.

Unter einem "ringmagnetähnlichen Magneten" wird vorliegend im Sinne der Erfindung ein Magnet verstanden, insbesondere ein Permanentmagnet, der zwar in Umfangsrichtung nicht vollständig geschlossen ist, aber derart ausgebildet ist, dass er nahezu, insbesondere vollständig, wie ein vollständig geschlossen ausgebildeter Ringmagnet wirkt.

Die Statoranordnung ist vorzugsweise ebenfalls konzentrisch zur Welle anordbar und insbesondere mit einem zweiten Teil der Welle drehfest verbindbar.

In einer vorteilhaften Ausgestaltung einer erfindungsgemäßen Drehmomentsensorvorrichtung ist die Statoranordnung insbesondere zumindest teilweise konzentrisch zur Magnetanordnung angeordnet, insbesondere zu dem wenigstens einen Magnetelement, wobei die Statoranordnung insbesondere zumindest teilweise außen um die Magnetanordnung herum angeordnet, vorzugsweise um das wenigstens eine Magnetelement herum und insbesondere mit einem definierten Luftspalt dazwischen.

Die Statoranordnung dient dabei insbesondere dazu und ist vorzugsweise dazu ausgebildet ist, einen magnetischen Fluss des von der Magnetanordnung erzeugten Magnetfeldes an die Flussleiteranordnung zu leiten.

In einer vorteilhaften Ausgestaltung einer erfindungsgemäßen Drehmomentsensorvorrichtung weist die Statoranordnung insbesondere einen ersten Stator und einen zweiten Stator auf, die jeweils konzentrisch zueinander entlang der Zentrumsachse angeordnet sind, wobei durch eine Relativbewegung zwischen der Magnetanordnung und der Statoranordnung in Umfangsrichtung ein magnetischer Fluss in der Statoranordnung erzeugbar ist, insbesondere jeweils ein magnetischer Fluss im ersten Stator und ein magnetischer Fluss im zweiten Stator, insbesondere gleichzeitig.

In einer vorteilhaften Ausgestaltung einer erfindungsgemäßen Drehmomentsensorvorrichtung weist der erste und/oder der zweite Stator insbesondere einen ringscheibenförmigem Statorkörper und sich von diesem in einer axialen Richtung weg erstreckende Laschen auf, wobei die Laschen insbesondere in Umfangsrichtung verteilt angeordnet sind, insbesondere gleichmäßig verteilt mit Abstandslücken dazwischen, wobei sich die Laschen insbesondere jeweils in eine axiale Richtung weg vom zugehörigen Statorkörper erstrecken, wobei der erste Stator und der zweite Stator bevorzugt derart ausgebildet und angeordnet sind, dass sich die Laschen des ersten Stators und des zweiten Stators jeweils in axialer Richtung vom zugehörigen Statorkörper in Richtung des anderen Stators erstrecken und insbesondere jeweils versetzt mit den Laschen des anderen Stators ineinandergreifen.

In einer vorteilhaften Ausgestaltung einer erfindungsgemäßen Drehmomentsensorvorrichtung weist der Statorkörper des ersten und/oder des zweiten Stators insbesondere jeweils einen radial inneren Rand und einen radial äußeren Rand auf, wobei sich die Laschen insbesondere vom radial inneren Rand des ringscheibenförmigen Statorkörpers aus weg erstrecken, insbesondere alle zur gleichen Seite, d.h. in eine gleiche Richtung.

Die Richtungsangabe "axial" bezieht sich vorliegend jeweils in fachüblicher Weise auf eine Richtung parallel zur Rotationsache der Welle bzw. auf eine Richtung parallel zur Zentrumsachse der Drehmomentsensorvorrichtung, die Richtungsangabe "Umfangsrichtung" entsprechend auf eine Rotationsrichtung um diese Rotations- bzw. Zentrumsachse, die Richtungsangabe "radial" auf eine Richtung, die senkrecht auf der axialen und Umfangsrichtung steht. Die Richtungsangabe "tangential" bezieht sich entsprechend auf eine Richtung, welche senkrecht auf der axialen Richtung und der radialen Richtung steht.

Die Anzahl der Polpaare in Umfangsrichtung des wenigstens einen Magnetelements der Magnetanordnung entspricht dabei besonders bevorzugt der Anzahl der Laschen des ersten und/oder des zweiten Stators. Für Drehmomentsensorvorrichtungen für Lenkwellen von Kraftfahrzeugen, insbesondere für den Einsatz in Personenkraftwagen (PKW), hat sich eine Anzahl von 8 Laschen für den ersten Stator und den zweiten Stator als besonders vorteilhaft herausgestellt.

Wenigstens ein Flussleiter der Drehmomentsensorvorrichtung kann dabei an der Statoranordnung angeordnet und entweder direkt an der Statoranordnung befestigt sein oder indirekt über einen Halter in der Drehmomentsensorvorrichtung aufgenommen sein. Der Flussleiter kann aber auch an einem Gehäuse der Drehmomentsensorvorrichtung angeordnet sein. Wichtig ist lediglich, dass der Flussleiter derart angeordnet und innerhalb der Drehmomentsensorvorrichtung platziert ist, dass jeweils der zugehörige magnetische Fluss im Flussleiter entsprechend gebündelt und mittels des Flussleiters über die wenigstens eine zugehörige Übertragungsfläche an wenigstens einen Magnetsensor einer Magnetsensoranordnung weitergeleitet werden kann.

In einer weiteren vorteilhaften Ausgestaltung einer erfindungsgemäßen Drehmomentsensorvorrichtung sind der erste Statorkörper und der zweite Statorkörper dabei insbesondere in axialer Richtung beabstandet zueinander angeordnet und wenigstens ein Flussleiter zumindest teilweise in axialer Richtung dazwischen.

Grundsätzlich ist aber auch die Anordnung wenigstens eines Flussleiters in axialer Richtung, d.h. entlang der Zentrumsachse, außerhalb der Statoranordnung möglich. Die Sammelflächen und die Übertragungsfläche(n) sind aber jeweils derart auszubilden und derart orientiert anzuordnen, dass sich die jeweils von den Sammelflächen gebündelten magnetischen Flüsse, die durch ein umgebendes Stör-Magnetfeld erzeugt werden, erfindungsgemäß zumindest teilweise aufheben, bevorzugt nahezu vollständig oder vollständig.

In einer vorteilhaften Ausgestaltung einer Drehmomentsensorvorrichtung gemäß der vorliegenden Erfindung weist die Drehmomentsensorvorrichtung ferner eine Magnetsensoranordnung auf mit wenigstens einem ersten Magnetsensor zum Erfassen des von der Flussleiteranordnung gebündelten, und bevorzugt auch verstärkten, und weitergeleiteten magnetischen Flusses, wobei die Magnetsensoranordnung, insbesondere wenigstens ein Magnetsensor der Magnetsensoranordnung, zur Erzeugung eines Sensorsignals in Abhängigkeit von einem auf die Drehmomentsensorvorrichtung aufgebrachten Drehmoments bzw. in Abhängigkeit von einem auf eine mit der Drehmomentsensorvorrichtung verbundenen Welle aufgebrachten Drehmoments ausgebildet ist. Die Magnetsensoranordnung kann dabei einen oder mehrere Magnetsensoren umfassen, insbesondere einen ersten Magnetsensor und ferner einen zweiten Magnetsensor, wobei vorzugsweise wenigstens ein Magnetsensor in dem von den Übertragungsflächen des ersten Flussleiters und des zweiten Flussleiters gebildeten axialen Spalt angeordnet ist.

Wenigstens ein Magnetsensor, vorzugsweise wenigstens ein erster und ein zweiter Magnetsensor, insbesondere sämtliche Magnetsensoren der Magnetsensoranordnung, kann insbesondere ein einfacher Hall-Sensor sein, mit dem eine senkrecht zur Sensorfläche des Hall-Sensors verlaufende magnetische Flussdichte eines Magnetfeldes bzw. ein Anteil der senkrecht zur Sensorfläche verlaufenden magnetischen Flussdichte des Magnetfeldes detektiert werden kann, wobei besonders bevorzugt wenigstens der erste Magnetsensor, insbesondere sämtliche Magnetsensoren gehäusefest angeordnet sind, d.h. stationär bzw. ortsfest gegenüber der drehbaren Welle.

In einer besonders vorteilhaften Ausgestaltung einer erfindungsgemäßen Drehmomentsensorvorrichtung ist, da besonders platz- bzw. bauraumsparend, insbesondere wenigstens ein Magnetsensor der Magnetsensoranordnung, insbesondere wenigstens ein erster und ein zweiter Magnetsensor, jeweils ein SMD-Magnetsensor, wobei der Magnetsensor insbesondere auf einer Leiterplatte angeordnet ist, die mit ihrer Leiterplattenebene normal zur Zentrumsachse der Statoranordnung bzw. der Drehmomentsensorvorrichtung orientiert angeordnet ist. Hierdurch lässt sich eine besonders kompakte Ausgestaltung einer erfindungsgemäßen Drehmomentsensorvorrichtung erreichen.

"SMD" steht für Surface-Mount Device (oberflächenmontiertes Bauelement), wobei SMD-Bauteile im Gegensatz vorbeschriebenen "bedrahteten" Bauteilen, die für die Durchsteckmontage (Through Hole Technology, THT) vorgesehen sind, keine Drahtanschlüsse aufweisen, sondern mittels lötfähiger Übertragungsflächen direkt auf eine Leiterplatte gelötet werden können.

In einer alternativen Ausgestaltung einer erfindungsgemäßen Drehmomentsensorvorrichtung kann aber auch wenigstens ein Magnetsensor der Magnetsensoranordnung ein bedrahteter Magnetsensor mit Anschlusspins sein, wobei der Magnetsensor in diesem Fall bevorzugt derart angeordnet ist, dass die Anschlusspins in radialer Richtung nach außen zeigen. Hierdurch lässt sich auch mit einem oder mehreren bedrahteten Magnetsensoren eine kompakte Anordnung erreichen, insbesondere wenn die Anschlusspins des bedrahteten Magnetsensors auf eine Leiterplatte gelötet sind, die mit ihrer Leiterplattenebene parallel zur Zentrumsachse der Statoranordnung bzw. der Drehmomentsensorvorrichtung orientiert angeordnet ist. Alternativ können die Anschlusspins auch mit einem Stanzgitter verbunden sein, insbesondere direkt in dieses eingesteckt sein, insbesondere mit einem Stanzgitter, das mit seiner Stanzgitterebene parallel zur Zentrumsachse der Statoranordnung orientiert angeordnet ist. Hierdurch lässt sich auch mit bedrahteten Magnetsensoren eine kompakte Anordnung erreichen.

In einer vorteilhaften Ausgestaltung einer erfindungsgemäßen Drehmomentsensorvorrichtung weist die Drehmomentsensorvorrichtung insbesondere außerdem eine Steuerungseinrichtung auf, die dazu ausgebildet ist, in Abhängigkeit von dem mittels der Magnetsensoranordnung erfassten magnetischen Fluss bzw. in Abhängigkeit von einem in Abhängigkeit von dem erfassten magnetischen Fluss erzeugten Sensorsignal, ein auf eine mit der Drehmomentsensorvorrichtung funktionsgemäß verbundenen Welle aufgebrachtes Drehmoment zu bestimmen.

Die Magnetsensoranordnung einer erfindungsgemäßen Drehmomentsensoranordnung kann insbesondere auch zwei oder mehr Magnetsensoren aufweisen, insbesondere einen ersten und einen zweiten Magnetsensor. Dies ermöglicht insbesondere eine redundante Auswertung bzw. Bereitstellung des Drehmomentsensorsignals und damit eine erhöhte Funktionssicherheit der Drehmomentsensorvorrichtung.

Weist eine erfindungsgemäße Drehmomentsensorvorrichtung einen ersten Magnetsensor und einen zweiten Magnetsensor auf, ist der zweite Magnetsensor besonders bevorzugt parallel zum ersten Magnetsensor angeordnet, vorzugsweise in einer Ebene mit dem ersten Magnetsensor, insbesondere in einer senkrecht auf der Zentrumsachse stehenden, gemeinsamen Ebene. Dies ermöglicht die Befestigung der beiden Magnetsensoren auf einer gemeinsamen Platine oder Leiterplatte, insbesondere, wenn die beiden Magnetsensoren SMD-Magnetsensoren sind, wobei sich die Leiterplatte in diesem Fall bevorzugt in einer senkrecht auf der Zentrumsachse stehenden Ebene erstreckt. Wenigstens ein Flussleiter weist in diesem Fall insbesondere zwei Übertragungsflächen auf, wobei vorzugsweise die beiden Übertragungsflächen eines Flussleiters in einer Ebene angeordnet sind.

Weist die Magnetsensoranordnung mehrere Magnetsensoren auf, weist insbesondere wenigstens ein Flussleiter mehrere Übertragungsflächen auf, insbesondere für jeden Magnetsensor jeweils eine zugehörige Übertragungsfläche, wobei in diesem Fall die erste Sammelfläche, und falls vorhanden die zweite Sammelfläche, insbesondere jeweils derart magnetisch leitend mit den Übertragungsflächen des zugehörigen Flussleiters gekoppelt sind, insbesondere magnetisch leitend mit diesen verbunden sind, und der Flussleiter derart ausgebildet ist, dass bevorzugt über jede der Übertragungsflächen jeweils ein im zugehörigen Flussleiter gebündelter und/oder verstärkter magnetischer Fluss gemäß der vorliegenden Erfindung an die Magnetsensoranordnung, insbesondere an einen der jeweiligen Übertragungsfläche zugeordneten Magnetsensor der Magnetsensoranordnung, übertragbar ist. D.h. im Fall von zwei Magnetsensoren weist der erste Flussleiter bevorzugt eine erste Übertragungsfläche und ferner eine zweite Übertragungsfläche zur Übertragung und/oder Weiterleitung des im zugehörigen Flussleiter gebündelten magnetischen Flusses auf.

Es können aber auch mehrere Magnetsensoren benachbart zu ein und derselben Übertragungsfläche angeordnet sein, d.h. einen ersten und/oder zweiten magnetischen Fluss über dieselbe, gemeinsame Übertragungsfläche empfangen. Beispielsweise kann der erste Flussleiter eine für zwei in einer gemeinsamen Ebene angeordnete Übertragungsfläche aufweisen und der zweite Flussleiter ebenfalls eine gemeinsame, gegenüberliegend von der Übertragungsfläche des ersten Flussleiters. Der zweite Flussleiter kann aber beispielsweise auch zwei einzelne separate Übertragungsflächen aufweisen, die jeweils mit der gemeinsamen Übertragungsfläche einen Spalt bilden, in dem jeweils ein Magnetsensor angeordnet oder anordbar ist. Ebenso kann der erste Flussleiter zwei einzelne Übertragungsflächen aufweisen, die gegenüberliegend von zwei einzelnen Übertragungsflächen des zweiten Flussleiters oder gegenüberliegend von einer gemeinsamen Übertragungsfläche des zweiten Flussleiters angeordnet sein können.

Besonders bevorzugt weisen jedoch beide Flussleiter jeweils zwei Übertragungsflächen auf, wobei jeweils eine Übertragungsfläche des ersten Flussleiters parallel zu einer Übertragungsfläche des zweiten Flussleiters angeordnet ist, vorzugsweise übereinander mit einem Spalt dazwischen, in welchen in radialer Richtung jeweils ein Magnetsensor hineinragt. Bevorzugt ist dabei ein erster Magnetsensor insbesondere in einem axialen Spalt zwischen den ersten Übertragungsflächen der beiden Flussleiter angeordnet und erstreckt sich in radialer Richtung in den Spalt zwischen den ersten Übertragungsflächen hinein, insbesondere parallel zu den ersten Übertragungsflächen, während ein zweiter Magnetsensor insbesondere in den axialen Spalt zwischen den zweiten Übertragungsflächen der beiden ersten und zweiten Flussleiter hineinragt.

Besonders bevorzugt ist eine erfindungsgemäße Drehmomentsensorvorrichtung in diesem Fall derart ausgebildet, dass die Magnetsensoren in einer Ebene angeordnet werden können, insbesondere auf ein- und derselben Leiterplatte oder Platine. Hierdurch ergibt sich eine besonders vorteilhafte Ausgestaltung einer erfindungsgemäßen Drehmomentsensorvorrichtung. Werden SMD-Magnetsensoren verwendet, kann eine Drehmomentsensorvorrichtung mit einer geringen Bauhöhe und damit einem geringen Bauraumbedarf in axialer Richtung, d.h. in Richtung der Zentrumsachse, bereitgestellt werden.

Für eine besonders geringe Bauhöhe kann die Leiterplatte im Bereich eines oder mehrerer Magnetsensoren bzw. einer oder mehrere Übertragungsflächen eine geringere Dicke aufweisen als im restlichen Bereich. Eine Dickenreduzierung der Leiterplatte kann beispielsweise durch entsprechende, insbesondere an einer Unterseite der Leiterplatte eingebrachte Nuten oder eine oder mehrere Aussparungen in diesem Bereich erreicht werden, in welche insbesondere die der Unterseite der Leiterplatte zugewandten Übertragungsflächen eingreifen bzw. hineinragen können.

Vorzugsweise sind der erste Flussleiter und der zweite Flussleiter, insbesondere deren Sammelfläche(n) und Übertragungsfläche(n) jeweils derart ausgebildet und derart relativ zueinander angeordnet und derart magnetisch leitend miteinander gekoppelt und besonders bevorzugt derart größenmäßig aufeinander und relativ zur Größe der jeweiligen Flächen des anderen Flussleiters abgestimmt, dass der durch das Stör-Magnetfeld erzeugte und gebündelte erste Stör-Fluss-Anteil und der durch das Stör-Magnetfeld erzeugte und gebündelte zweite Stör-Fluss-Anteil im Spalt zwischen den Übertragungsflächen vorzugsweise in entgegengesetzten Richtungen orientiert sind und insbesondere einen gleichen Betrag bzw. die gleiche Stärke aufweisen, d.h. gleich groß sind.

Besonders bevorzugt ist der zweite Flussleiter in Richtung der Zentrumsachse gegenüberliegend vom ersten Flussleiter angeordnet, insbesondere derart, dass die erste Sammelfläche des zweiten Flussleiters parallel zur ersten Sammelfläche des ersten Flussleiters angeordnet ist, insbesondere gegenüberliegend von dieser, wobei die ersten Sammelflächen insbesondere kongruent zueinander ausgebildet sind.

Zur Reduzierung einer Teilevielfalt bzw. einer Variantenvielfalt und damit der Kosten für eine Drehmomentsensorvorrichtung, ist der zweite Flussleiter besonders bevorzugt identisch zum ersten Flussleiter ausgebildet, d.h. insbesondere geometrisch gleich ausgebildet oder ein Gleichteil, wobei der zweite Flussleiter jedoch bevorzugt um 180° verdreht zum ersten Flussleiter angeordnet ist, so dass jeweils die ersten Sammelflächen und die zweiten Sammelflächen und die Übertragungsfläche(n) gegenüberliegend voneinander und einen axialen Spalt bildend angeordnet sind.

In einer weiteren vorteilhaften Ausgestaltung einer erfindungsgemäßen Drehmomentsensorvorrichtung ist insbesondere wenigstens ein Flussleiter ein Stanzteil oder ein Stanzbiegeteil, vorzugsweise sämtliche Flussleiter, und insbesondere aus einem Blechmaterial hergestellt, besonders bevorzugt aus einem weichmagnetischen Werkstoff, wie es aus dem Stand der Technik allgemein bekannt ist. Dies ermöglicht eine besonders einfache, kostengünstige und bzgl. der Geometrie flexible Herstellung eines Flussleiters mit guten magnetischen Eigenschaften.

In einer besonders vorteilhaften Ausgestaltung einer Drehmomentsensorvorrichtung gemäß der vorliegenden Erfindung weist der erste Flussleiter ferner ebenfalls eine zweite Sammelfläche auf, wobei die zweite Sammelfläche des ersten Flussleiters mit der wenigstens einen Übertragungsfläche des ersten Flussleiters magnetisch leitend gekoppelt ist und ebenfalls zur Erzeugung bzw. zur zumindest teilweisen Bündelung und Weiterleitung eines zweiten magnetischen Stör-Flusses in Abhängigkeit von einem die Drehmomentsensorvorrichtung umgebenden Stör-Magnetfeld ausgebildet ist, wobei der erste Flussleiter und der zweite Flussleiter jeweils derart ausgebildet und derart relativ zueinander angeordnet sind, dass sich, wenn die Drehmomentsensorvorrichtung von einem Stör-Magnetfeld umgeben ist, ein in der ersten Sammelfläche des zweiten Flussleiters zumindest teilweise gebündelter und über die wenigstens eine Übertragungsfläche des zweiten Flussleiters an den Magnetsensor übertragener erster Stör-Fluss-Anteil des zweiten magnetischen Flusses, und ein in der zweiten Sammelfläche des ersten Flussleiters teilweise gebündelter und über die wenigstens eine Übertragungsfläche des ersten Flussleiters an den Magnetsensor übertragener zweiter Stör-Fluss-Anteil des ersten magnetischen Flusses zumindest teilweise aufheben.

Hierdurch lässt sich die Robustheit der Drehmomentsensorvorrichtung weiter steigern. Zum einen kann auch ein durch ein entgegengesetztes externes Stör-Feld, welches in der ersten Sammelfläche des zweiten Flussleiters zu einem ersten Stör-Fluss-Anteil führt, zumindest teilweise oder nahezu vollständig oder vollständig kompensiert werden. Zum anderen kann eine weiter verbesserte Reduzierung bzw. Kompensation eines ersten, in der ersten Sammelfläche des ersten Flussleiters erzeugten Stör-Fluss-Anteils erreichen, da durch die weitere zweite Sammelfläche des ersten Flussleiters eine Einkopplung des von der zweiten Sammelfläche des zweiten Flussleiters gebündelten zweiten Stör-Flusses in die Statoranordnung reduziert bzw. in einigen Fällen sogar ganz vermieden werden kann, wobei über die zweite Sammelfläche des ersten Flussleiters in diesem Fall besonders bevorzugt ein zweiter Stör-Fluss-Anteil in die Umgebung abfließen kann.

Die zweite Sammelfläche des ersten Flussleiters ist dabei bevorzugt insbesondere in Richtung der Zentrumsache parallel zur zweiten Sammelfläche des zweiten Flussleiters angeordnet, insbesondere gegenüberliegend von diese und besonders bevorzugt insbesondere kongruent zu dieser ausgebildet.

In einer weiteren vorteilhaften Ausgestaltung einer Drehmomentsensorvorrichtung gemäß der vorliegenden Erfindung erstreckt sich die erste Sammelfläche und/oder die zweite Sammelfläche und/oder wenigstens die erste Übertragungsfläche, insbesondere sämtliche Übertragungsflächen (falls mehrere vorhanden sind) wenigstens eines Flussleiters zumindest teilweise, insbesondere nahezu vollständig oder vollständig, in einer Ebene, die senkrecht zur Zentrumsachse der Drehmomentsensorvorrichtung verläuft, d.h. in einer Normalenebene zur Zentrumsachse bzw. in einer Ebene, die sich normal zur Zentrumsachse erstreckt, d.h. orthogonal auf der Zentrumsachse steht. Hierdurch lässt sich auf besonders einfache Art und Weise eine für eine Kompensation des Stör-Flusses vorteilhafte bzw. erforderliche Anordnung der Sammelflächen des Flussleiters erreichen.

Erstrecken sich die erste Sammelfläche und/oder die zweite Sammelfläche wenigstens eines Flussleiters dabei insbesondere in radialer Richtung und in Umfangsrichtung, kann ein besonders vorteilhafter Flussleiter bereitgestellt werden, insbesondere ein besonders kompakter und wirkungsvoller Flussleiter.

Die erste Sammelfläche und/oder die zweite Sammelfläche wenigstens eines Flussleiters kann jeweils insbesondere ringsegmentförmig ausgebildet sein, was besonders vorteilhaft hinsichtlich eines Bauraumbedarfs der Drehmomentsensorvorrichtung in radialer Richtung ist, insbesondere wenn die erste Sammelfläche wenigstens eines Flussleiters auf diese Weise ausgebildet ist, da diese sich dann bei einer entsprechenden Ausgestaltung nahezu ohne zusätzlichen Bauraumbedarf innerhalb eines für die Statoranordnung benötigten Bauraums anordnen lässt.

Wenigstens eine Sammelfläche kann aber auch rechteckig, bspw. quadratisch oder dergleichen, ausgebildet sein oder oval oder nierenförmig oder dergleichen. Wichtig ist im Wesentlichen, dass die Sammelfläche die gewünschte Funktion erfüllt und gezielt und ausreichend den jeweils gewünschten magnetischen Fluss mit der gewünschten Flussrichtung bündelt und diesen mit der gewünschten Flussrichtung, insbesondere einer für die Funktion der Drehmomentsensorvorrichtung vorteilhaften Flussrichtung, an die Übertragungsfläche(n) des zugehörigen Flussleiters weiterleitet.

In einer weiteren möglichen, vorteilhaften Ausgestaltung einer Drehmomentsensorvorrichtung gemäß der vorliegenden Erfindung weisen die erste Sammelfläche und/oder die zweite Sammelfläche wenigstens eines Flussleiters insbesondere eine ähnliche oder identische Form auf. Es können alternativ oder zusätzlich auch die erste Sammelfläche eines der beiden Flussleiter und die zweite Sammelfläche des anderen der beiden Flussleiter jeweils insbesondere eine ähnliche oder identische Form aufweisen, wobei die erste Sammelfläche und die zweite Sammelfläche insbesondere jeweils kongruent ausgebildet sein können. Hierdurch lässt sich insbesondere durch ein ähnliches Bündelungsverhalten der beiden Sammelflächen des Flussleiters, eine gute Kompensation eines durch ein Stör-Magnetfeld erzeugten magnetischen Flusses erreichen, eine entsprechende Lage, Größe und Orientierung der ersten und zweiten Sammelfläche relativ zueinander vorausgesetzt. Grundsätzlich können die Sammelflächen eines Flussleiters aber auch unterschiedlich ausgebildet sein.

In einer weiteren möglichen und vorteilhaften Ausgestaltung einer Drehmomentsensorvorrichtung gemäß der vorliegenden Erfindung ist bevorzugt wenigstens eine Übertragungsfläche rechteckig ausgebildet, insbesondere ähnlich der Geometrie des zugehörigen Magnetsensors. Hierdurch kann eine gute Übertragung bzw. Einkopplung des im Flussleiter gebündelten, resultierenden magnetischen Flusses von der Übertragungsfläche in die Magnetsensoranordnung, insbesondere in den jeweiligen, mit einem definierten Spalt benachbart zu der Übertragungsfläche angeordneten, zugehörigen Magnetsensor erreicht werden.

In einer vorteilhaften Ausgestaltung einer Drehmomentsensorvorrichtung gemäß der vorliegenden Erfindung sind die erste und/oder die zweite Sammelfläche und/oder eine der Übertragungsflächen, insbesondere alle Übertragungsflächen, jeweils plattenförmig oder scheibenförmig ausgebildet, wobei eine Dicke des Flussleiters im Bereich der ersten und/oder der zweiten Sammelfläche und/oder wenigstens einer der Übertragungsflächen, insbesondere aller Übertragungsflächen, in Richtung der Zentrumsachse, d.h. parallel zur Zentrumsachse, jeweils sehr viel kleiner als in radialer Richtung sowie in Umfangsrichtung ist.

In einer weiteren vorteilhaften Ausgestaltung einer Drehmomentsensorvorrichtung gemäß der vorliegenden Erfindung erstreckt sich die zweite Sammelfläche wenigstens eines Flussleiters bevorzugt zumindest teilweise, insbesondere nahezu vollständig oder vollständig, parallel zur ersten Sammelfläche des zugehörigen Flussleiters, insbesondere in einer von der ersten Sammelfläche verschiedenen Ebene. Hierdurch kann eine besonders gute Kompensation eines durch ein Stör-Magnetfeld erzeugten magnetischen Flusses erreicht werden, insbesondere eine besonders gute Kompensation eines ersten Stör-Fluss-Anteils.

Besonders bevorzugt erstreckt sich die wenigstens eine Übertragungsfläche des Flussleiters dabei zumindest teilweise, insbesondere nahezu vollständig oder vollständig, in einer von der ersten Sammelfläche und/oder in einer von der zweiten Sammelfläche verschiedenen Ebene. Hierdurch kann auf einfache Art und Weise ein für eine Kompensation eines durch ein Stör-Magnetfeld erzeugten magnetischen Flusses vorteilhafter Flussleiter bereitgestellt werden.

In einer weiteren, besonders vorteilhaften und daher bevorzugten Ausgestaltung einer Drehmomentsensorvorrichtung gemäß der vorliegenden Erfindung erstreckt sich wenigstens eine Übertragungsfläche wenigstens eines Flussleiters zumindest teilweise, insbesondere nahezu vollständig oder vollständig, in einer in Richtung der Zentrumsachse zwischen der ersten Sammelfläche und der zweiten Sammelfläche liegenden Ebene, d.h. in axialer Richtung zwischen der ersten Sammelfläche und der zweiten Sammelfläche des zugehörigen Flussleiters. Hierdurch kann auf einfache Art und Weise eine besonders gute Kompensation eines durch ein Stör-Magnetfeld erzeugten magnetischen Flusses erreicht werden, insbesondere eine besonders gute Kompensation eines ersten Stör-Fluss-Anteils, insbesondere im Spalt zwischen den Übertragungsflächen.

In einer weiteren vorteilhaften Ausgestaltung einer Drehmomentsensorvorrichtung gemäß der vorliegenden Erfindung ist die erste Sammelfläche wenigstens eines Flussleiters bevorzugt in radialer Richtung zumindest teilweise, vorzugsweise nahezu vollständig oder vollständig, innerhalb der Statoranordnung angeordnet, insbesondere zumindest teilweise mit dieser in radialer Richtung überlappend. Hierdurch lässt sich eine besonders kompakte Drehmomentsensorvorrichtung bereitstellen, insbesondere in radialer und/oder axialer Richtung.

Weist die Statoranordnung wie vorbeschrieben einen Stator mit einem ringscheibenförmigen Statorkörper auf, ist die erste Sammelfläche wenigstens eines Flussleiters vorzugsweise in radialer Richtung zumindest teilweise überlappend, vorzugsweise vollständig überlappend, mit dem ringscheibenförmigen Statorkörper angeordnet, wobei die erste Sammelfläche sich vorzugsweise in radialer Richtung nicht über einen äußeren Rand der Ringscheibe hinaus erstreckt. Hierdurch lässt sich eine besonders kompakte Drehmomentsensorvorrichtung bereitstellen, insbesondere in radialer Richtung.

In einer weiteren, besonders vorteilhaften Ausgestaltung einer Drehmomentsensorvorrichtung gemäß der vorliegenden Erfindung erstreckt sich die zweite Sammelfläche wenigstens eines Flussleiters in radialer Richtung weiter nach außen als die erste Sammelfläche des zugehörigen Flussleiters und/oder ist in radialer Richtung weiter außen angeordnet als die erste Sammelfläche des zugehörigen Flussleiters. D.h., die zweite Sammelfläche wenigstens eines Flussleiters, insbesondere ein Flächenschwerpunkt von dieser, ist bevorzugt mit einem größeren Abstand in radialer Richtung zur Zentrumsachse angeordnet als die erste Sammelfläche des zugehörigen Flussleiters. Hierdurch kann in der zweiten Sammelfläche eine reduzierte Bündelung des in Abhängigkeit vom Nutz-Magnetfeld erzeugten magnetischen Flusses und eine verstärkte Bündelung des vom die Drehmomentsensorvorrichtung umgebenden Stör-Magnetfeldes erreicht werden, wodurch eine unerwünschte Reduzierung des vom Nutz-Magnetfeld abhängigen magnetischen Flusses verringert aber eine verbesserte Kompensation des vom Stör-Magnetfeld abhängigen magnetischen Flusses erreicht werden kann. Je weiter in radialer Richtung außen die zweite Sammelfläche angeordnet ist, desto größer ist der Anteil des vom Stör-Magnetfeld erzeugten magnetischen Flusses, der von der zweiten Sammelfläche gebündelt werden kann mit der zweiten Flussrichtung und damit der Anteil des vom Stör-Magnetfeld erzeugten und in der ersten Sammelfläche gebündelten magnetischen Flusses, der ausgeglichen bzw. kompensiert werden kann.

Die erste Sammelfläche ist hingegen bevorzugt möglichst nah an der Statoranordnung angeordnet, um eine gute Bündelung des in der Statoranordnung erzeugten magnetischen Flusses zu erreichen, insbesondere eine gute Bündelung des in der Statoranordnung durch das Nutz-Magnetfeld erzeugten magnetischen Flusses, anhand dessen das Drehmomentsignal erzeugt wird, insbesondere in radialer Richtung innerhalb dieser.

In einer möglichen und hinsichtlich des Bauraumbedarfs in axialer Richtung besonders vorteilhaften Ausgestaltung einer Drehmomentsensorvorrichtung gemäß der vorliegenden Erfindung sind die erste Sammelfläche und/oder die zweite Sammelfläche und/oder wenigstens eine Übertragungsfläche, insbesondere sämtliche Übertragungsflächen, wenigstens eines Flussleiters, besonders bevorzugt der gesamte jeweilige Flussleiter, bevorzugt in axialer Richtung innerhalb der Statoranordnung angeordnet, insbesondere in axialer Richtung, d.h. in Richtung der Zentrumsachse, zwischen den Ringscheiben des ersten Stators und des zweiten Stators bzw. in axialer Richtung jeweils zwischen den ringscheibenförmigen Statorkörpern., d.h. in axialer Richtung auf einer Höhe entlang der Zentrumsachse innerhalb der Statoranordnung, insbesondere zumindest teilweise seitlich neben der Statoranordnung, wobei insbesondere die zweite Sammelfläche wenigstens eines Flussleiters in axialer Richtung auf Höhe der Statoranordnung angeordnet ist. Hierdurch lässt sich eine besonders kompakte Bauweise einer erfindungsgemäßen Drehmomentsensorvorrichtung erreichen, insbesondere in axialer Richtung.

Für eine möglichst gute Bündelung des durch ein die Drehmomentsensorvorrichtung umgebendes Stör-Magnetfeld erzeugten magnetischen Flusses in der zweiten Sammelfläche wenigstens eines Flussleiters, ist diese wenn sie in axialer Richtung auf Höhe der Statoranordnung angeordnet ist, bevorzugt in radialer Richtung zumindest teilweise, vorzugsweise nahezu vollständig oder vollständig, außerhalb der Statoranordnung angeordnet, insbesondere nicht mit dieser in radialer Richtung überlappend.

In einer alternativen, aber ebenfalls möglichen Ausgestaltung kann die zweite Sammelfläche wenigstens eines Flussleiters aber auch in axialer Richtung entlang der Zentrumsachse oberhalb oder unterhalb der Statoranordnung angeordnet sein, insbesondere mit einem definierten Abstand zu dieser, insbesondere mit einem definierten Mindest-Abstand, um eine Einkopplung eines in der Statoranordnung erzeugten magnetischen Flusses in die zweite Sammelfläche zu reduzieren oder im Wesentlichen, insbesondere vollständig, zu vermeiden. In diesem Fall kann die zweite Sammelfläche wenigstens eines Flussleiters in radialer Richtung auch zumindest teilweise oder vollständig innerhalb der Statoranordnung angeordnet sein und insbesondere mit dieser überlappend. Wichtig ist jedoch ein definierter Abstand der zweiten Sammelfläche in axialer Richtung zur Statoranordnung, insbesondere ein definierter Mindest-Abstand, um eine Einkopplung eines in der Statoranordnung erzeugten magnetischen Flusses in die zweite Sammelfläche zu reduzieren oder zu vermeiden.

Für eine gute Kompensation, insbesondere für eine möglichst vollständige Kompensation des in der ersten Sammelfläche gebündelten und das Drehmoment-Nutzsignal verfälschenden, durch das Stör-Magnetfeld erzeugten ersten Stör-Fluss-Anteils, sollte der von der zweiten Sammelfläche gebündelte, durch das Stör-Magnetfeld erzeugte zweite Stör-Fluss-Anteil im Spalt zwischen den Übertragungsflächen den gleichen Betrag, jedoch eine entgegengesetzte Flussrichtung aufweisen zu dem ersten Stör-Fluss-Anteil.

Über die Größe der zweiten Sammelfläche des jeweiligen Flussleiters kann der Betrag des von der zweiten Sammelfläche gebündelten magnetischen Stör-Fluss-Anteils beeinflusst werden, insbesondere für ein definiertes Stör-Magnetfeld derart angepasst werden, dass eine gute Kompensation des insbesondere vom anderen Flussleiters gebündelten, ersten Stör-Fluss-Anteils, der in der Statoranordnung erzeugt wird, erreicht wird.

In einer weiteren vorteilhaften Ausgestaltung einer Drehmomentsensorvorrichtung gemäß der vorliegenden Erfindung ist daher eine Größe der zweiten Sammelfläche derart gewählt, dass ein durch ein definiertes, die Drehmomentsensorvorrichtung umgebendes Stör-Magnetfeld mit definierter Feldrichtung erzeugter und von der zweiten Sammelfläche gebündelter zweiter magnetischer Stör-Fluss so groß ist, dass ein definierter Anteil des ersten Stör-Flusses kompensiert wird, vorzugsweise in dem axialen Spalt zwischen der wenigstens einen Übertragungsfläche des ersten Flussleiters und der wenigstens einen Übertragungsfläche des zweiten Flussleiters, insbesondere ein Anteil von wenigstens 25%, 50% oder 75% des durch das Stör-Magnetfeld erzeugten des ersten Stör-Flusses.

D.h., dass vorzugsweise die Größe der zweiten Sammelfläche wenigstens eines Flussleiters derart gewählt ist, dass bei einem definierten, die Drehmomentsensorvorrichtung umgebenden Stör-Magnetfeld mit einer definierten Feldrichtung, der durch dieses Stör-Magnetfeld erzeugte und in der ersten Sammelfläche des anderen Flussleiters gebündelte magnetische Fluss durch den zweiten, durch dieses Stör-Magnetfeld erzeugten und von der zweiten Sammelfläche gebündelten magnetischen Fluss zumindest teilweise, insbesondere zu wenigstens 25%, 50% oder 75%, insbesondere vollständig, d.h. zu 100%, ausgeglichen bzw. kompensiert wird, so dass eine unerwünschte Beeinflussung bzw. Verfälschung des in Abhängigkeit vom Nutz-Magnetfeld erzeugten und über die Übertragungsfläche an die Magnetsensoranordnung weitergeleiteten resultierenden magnetischen Flusses durch das Stör-Magnetfeld reduziert oder sogar ganz vermieden wird und ein auf den Magnetsensor resultierender, magnetische Fluss nur geringe oder keine Stör-Anteile enthält.

Die zweite Sammelfläche wenigstens eines Flussleiters ist dabei besonders bevorzugt derart ausgebildet, insbesondere ist die Größe dieser dabei derart gewählt, dass der resultierende, auf den Magnetsensor wirkende magnetische Fluss nur vom Nutz-Magnetfeld bzw. dem aufgebrachten Drehmoment und der Relativbewegung zwischen der Magnetanordnung und der Statoranordnung abhängt, nicht jedoch vom Stör-Magnetfeld.

Es hat sich als besonders vorteilhaft herausgestellt, wenn die Größe der Fläche der zweiten Sammelfläche wenigstens etwa 75%, 100%, 125%, 150%, 200% oder 250% der Größe der Fläche der ersten Sammelfläche des zugehörigen und/oder des anderen Flussleiters aufweist, höchstens jedoch etwa 100%, 150%, 200%, 250% oder 300% der Größe der Fläche ersten Sammelfläche des zugehörigen und/oder des anderen Flussleiters beträgt.

In einer weiteren vorteilhaften Ausgestaltung einer Drehmomentsensorvorrichtung gemäß der vorliegenden Erfindung ist die zweite Sammelfläche wenigstens eines Flussleiters insbesondere wenigstens so groß wie die erste Sammelfläche des zugehörigen Flussleiters und/oder des anderen Flussleiters, vorzugsweise in etwa oder genauso groß, d.h. vergleichbar groß, oder beträgt wenigstens das 1,3-fache, 1,5-fache, 2-fache, 2.5-fache oder 3-fache von der ersten Sammelfläche, höchstens insbesondere jedoch das 4-fache.

In einer weiteren, besonders vorteilhaften und daher bevorzugten Ausgestaltung einer Drehmomentsensorvorrichtung gemäß der vorliegenden Erfindung weist wenigstens ein Flussleiter einen Verbindungsabschnitt auf, über welchen insbesondere die erste Sammelfläche und die zweite Sammelfläche wenigstens eines Flussleiters magnetisch leitend miteinander gekoppelt, insbesondere verbunden sind, wobei sich der Verbindungsabschnitt besonders bevorzugt parallel zur Zentrumsachse und in radialer Richtung und/oder parallel zur Zentrumsachse und in Umfangsrichtung erstrecken kann.

Dabei sind bevorzugt ferner die erste Sammelfläche und/oder die zweite Sammelfläche über diesen und/oder über wenigstens einen weiteren Verbindungsabschnitt mit wenigstens einer Übertragungsfläche verbunden, wobei sich auch der weitere Verbindungsabschnitt dabei insbesondere in radialer Richtung und parallel zur Zentrumsachse erstrecken kann und/oder parallel zur Zentrumsachse und in Umfangsrichtung.

Wenigstens ein Verbindungsabschnitt kann dabei im Wesentliche parallel oder parallel zur Zentrumsachse verlaufen. Wenigstens ein Verbindungsabschnitt kann aber auch gekrümmt und/oder zur Zentrumsachse geneigt, schräg o.ä. verlaufen.

Mittels eines Verbindungsabschnitts lässt sich auf besonders einfache Art und Weise eine magnetisch leitende Kopplung bzw. Verbindung der Sammelflächen bzw. der Sammelflächen mit einer oder mehreren Übertragungsflächen erreichen. Die wenigstens eine Übertragungsfläche eines erfindungsgemäßen Flussleiters bzw. einer erfindungsgemäßen Flussleiteranordnung bzw. einer erfindungsgemäßen Drehmomentsensoranordnung ist bevorzugt mit der ersten Sammelfläche und/oder der zweiten Sammelfläche (sofern vorhanden) des zugehörigen Flussleiters magnetisch leitend gekoppelt, insbesondere über einen Verbindungsabschnitt. Sind zwei Übertragungsflächen pro Flussleiter vorgesehen, können beide Übertragungsflächen mit derselben Sammelfläche des zugehörigen Flussleiters gekoppelt sein, insbesondere über einen gemeinsamen Verbindungsabschnitt oder über jeweils separate Verbindungsabschnitte. Es kann alternativ aber auch eine erste Übertragungsfläche über einen ersten Verbindungsabschnitt mit der ersten Sammelfläche gekoppelt sein und die zweite Übertragungsfläche über einen zweiten Verbindungsabschnitt mit der zweiten Sammelfläche. Wichtig ist lediglich, dass die Auswertung später korrekt erfolgt und die Sammelflächen eines jeweiligen Flussleiters jeweils entsprechend mit den zugehörigen Übertragungsflächen des Flussleiters magnetisch leitend gekoppelt sind, sowie dass wenigstens eine Übertragungsfläche des ersten Flussleiters und wenigstens eine Übertragungsfläche des zweiten Flussleiters insbesondere derart angeordnet sind, dass sie einen axialen Spalt bilden, in welchen ein zugehöriger Magnetsensor einer Magnetsensoranordnung zur Erzeugung des Drehmomentsensorsignals hineinragen kann. Hierdurch lassen sich vielfältigste, bauraumvorteilhafte Ausgestaltungen eines erfindungsgemäßen Flussleiters realisieren.

"Magnetisch leitend gekoppelt" heißt im Sinne der vorliegenden Erfindung dabei derart, dass ein magnetischer Fluss von der einen Fläche zu der anderen geleitet werden kann, insbesondere ohne einen Spalt zu überwinden. D.h. bevorzugt sind miteinander magnetisch leitend gekoppelte Flächen auch elektrisch leitend miteinander gekoppelt bzw. verbunden.

In einer möglichen Ausgestaltung einer Drehmomentsensorvorrichtung gemäß der vorliegenden Erfindung ist wenigstens ein Flussleiter einteilig ausgebildet. Hierdurch lässt sich die Bauteilanzahl der für eine erfindungsgemäße Drehmomentsensorvorrichtung erforderlichen Bauteile auf einfache Art und Weise reduzieren. Dies wirkt sich vorteilhaft auf die Herstellkosten sowie die Montage als solche als auch auf die Montagekosten aus, da weniger Teile zusammenzusetzen sind.

In einer alternativen, aber ebenfalls möglichen Ausgestaltung einer Drehmomentsensorvorrichtung gemäß der vorliegenden Erfindung, insbesondere in einer Weiterbildung, ist wenigstens ein Flussleiter mehrteilig ausgebildet, insbesondere zweiteilig, d.h. aus mehreren, insbesondere zwei, Teilen zusammengesetzt, wobei vorzugsweise eine Teil des Flussleiters die erste Sammelfläche oder die zweite Sammelfläche umfasst und gegebenenfalls eine oder mehrere Übertragungsflächen und ein weiterer Teil die andere Sammelfläche.

Dies ermöglicht eine flexible Anpassung des Flussleiters und damit der Drehmomentsensorvorrichtung an verschiedene Einsatzzwecke, beispielsweise für verschiedene Fahrzeuge mit unterschiedlichen, die Drehmomentsensorvorrichtung im Betrieb umgebenden Stör-Magnetfeldern. Insbesondere wenn die zweite Sammelfläche wenigstens eines Flussleiters durch ein separates Bauteil gebildet ist oder Teil eines separaten Bauteils des Flussleiters ist, kann beispielsweise durch den Austausch dieses Bauteils auf einfache Art und Weise eine Größe und/oder Lage und/oder Orientierung der zweiten Sammelfläche wenigstens eines Flussleiters angepasst werden. Hierdurch kann auf einfache Art und Weise eine Kompensation des Stör-Magnetfeld-Flusses verbessert werden. Entsprechendes gilt für die erste Sammelfläche und/oder eine oder mehrere Übertragungsflächen.

Ebenso lassen sich auf diese Weise zum einen herkömmliche Drehmomentsensorvorrichtungen bzw. herkömmliche Flussleiter nachrüsten zu einer erfindungsgemäßen Drehmomentsensorvorrichtung bzw. zu einem erfindungsgemäßen Flussleiter. Ferner ermöglicht ein mehrteiliger Flussleiter bei entsprechender Ausgestaltung auf einfache Art und Weise die Bereitstellung mehrerer Varianten von Drehmomentsensorvorrichtungen mit unterschiedlicher Ausgestaltung einer Stör-Fluss-Kompensation mit einem großen Gleichteil-Umfang, insbesondere die Bereitstellung einer Drehmomentsensorvorrichtung ohne Stör- Fluss-Kompensation und einer oder mehrerer Drehmomentsensorvorrichtungen mit Stör-Magnetfeld-Fluss-Kompensation, wobei jeweils nur ein entsprechender zusätzlicher bzw. anderer Flussleiter-Teil vorzusehen ist.

Eine erfindungsgemäße Flussleiteranordnung für eine Drehmomentsensorvorrichtung, insbesondere für eine erfindungsgemäße Drehmomentsensorvorrichtung, weist wenigstens einen ersten Flussleiter und einen zweiten Flussleiter auf, wobei der erste Flussleiter und der zweite Flussleiter jeweils eine erste Sammelfläche sowie jeweils wenigstens eine Übertragungsfläche aufweisen, wobei die ersten Sammelflächen jeweils ausgebildet sind zur zumindest teilweisen Bündelung und/oder zur zumindest teilweisen Weiterleitung eines in der Statoranordnung einer Drehmomentsensorvorrichtung in Abhängigkeit von einem aufgebrachten Drehmoment erzeugten magnetischen Nutz-Flusses und/oder eines in Abhängigkeit von einem die Drehmomentsensorvorrichtung umgebenden Stör-Magnetfeld erzeugten ersten magnetischen Stör-Flusses.

Die wenigstens eine Übertragungsfläche des ersten Flussleiters und die wenigstens eine Übertragungsfläche des zweiten Flussleiters sind dabei derart gegenüberliegend angeordnet, dass sie einen axialen Spalt zwischen sich bilden, in dem wenigstens ein Magnetsensor einer Magnetsensoranordnung anordbar ist, wobei über die wenigstens eine Übertragungsfläche des ersten Flussleiters ein im ersten Flussleiter gebündelter, erster magnetischer Fluss an einen in dem axialen Spalt angeordneten Magnetsensor einer Magnetsensoranordnung übertragbar ist, und wobei über die wenigstens eine Übertragungsfläche des zweiten Flussleiters ein im zweiten Flussleiter gebündelter, zweiter magnetischer Fluss an den Magnetsensor übertragbar ist.

Erfindungsgemäß weist der zweite Flussleiter ferner eine mit der wenigstens einen Übertragungsfläche des zweiten Flussleiters magnetisch leitend gekoppelte, zweite Sammelfläche auf, die zur Erzeugung bzw. zur zumindest teilweisen Bündelung und Weiterleitung eines zweiten magnetischen Stör-Flusses in Abhängigkeit von einem die Drehmomentsensorvorrichtung umgebenden Stör-Magnetfeld ausgebildet ist, wobei der erste Flussleiter und der zweite Flussleiter jeweils derart ausgebildet und derart relativ zueinander angeordnet sind, dass sich, wenn die Drehmomentsensorvorrichtung von einem Stör-Magnetfeld umgeben ist, ein in der ersten Sammelfläche des ersten Flussleiters zumindest teilweise gebündelter und über die wenigstens eine Übertragungsfläche des ersten Flussleiters an den Magnetsensor übertragener erster Stör-Fluss-Anteil des ersten magnetischen Flusses, und ein in der zweiten Sammelfläche des zweiten Flussleiters zumindest teilweise gebündelter und über die wenigstens eine Übertragungsfläche des zweiten Flussleiters an den Magnetsensor übertragener zweiter Stör-Fluss-Anteil des zweiten magnetischen Flusses zumindest teilweise aufheben, insbesondere in dem von den Übertragungsflächen gebildeten Spalt.

In einer besonders vorteilhaften Ausgestaltung einer Flussleiteranordnung gemäß der vorliegenden Erfindung weist der erste Flussleiter ferner ebenfalls eine zweite Sammelfläche auf, wobei die zweite Sammelfläche des ersten Flussleiters mit der wenigstens einen Übertragungsfläche des ersten Flussleiters magnetisch leitend gekoppelt ist und ebenfalls zur Erzeugung bzw. zur zumindest teilweisen Bündelung und Weiterleitung eines zweiten magnetischen Stör-Flusses in Abhängigkeit von einem eine Drehmomentsensorvorrichtung umgebenden Stör-Magnetfeld ausgebildet ist, wobei der erste Flussleiter und der zweite Flussleiter jeweils derart ausgebildet und derart relativ zueinander angeordnet sind, dass sich, wenn die Drehmomentsensorvorrichtung von einem Stör-Magnetfeld umgeben ist, ein in der ersten Sammelfläche des zweiten Flussleiters zumindest teilweise gebündelter und über die wenigstens eine Übertragungsfläche des zweiten Flussleiters an den Magnetsensor übertragener erster Stör-Fluss-Anteil des zweiten magnetischen Flusses, und ein in der zweiten Sammelfläche des ersten Flussleiters zumindest teilweise gebündelter und über die wenigstens eine Übertragungsfläche des ersten Flussleiters an den Magnetsensor übertragener zweiter Stör-Fluss-Anteil des ersten magnetischen Flusses zumindest teilweise aufheben.

Ein erfindungsgemäßer Flussleiter für eine Flussleiteranordnung einer Drehmomentsensorvorrichtung ist insbesondere zur Verwendung in einer erfindungsgemäßen Flussleiteranordnung und/oder zur Verwendung in einer erfindungsgemäßen Drehmomentsensorvorrichtung ausgebildet und weist eine erste Sammelfläche sowie wenigstens eine Übertragungsfläche auf, wobei die erste Sammelfläche ausgebildet ist zur zumindest teilweisen Bündelung und/oder zur zumindest teilweisen Weiterleitung eines in der Statoranordnung einer Drehmomentsensorvorrichtung in Abhängigkeit von einem aufgebrachten Drehmoment erzeugten magnetischen Nutz-Flusses und/oder eines in Abhängigkeit von einem die Drehmomentsensorvorrichtung umgebenden Stör-Magnetfeld erzeugten ersten magnetischen Stör-Flusses, wobei über die wenigstens eine Übertragungsfläche des Flussleiters ein im Flussleiter gebündelter magnetischer Fluss an einen benachbart angeordneten Magnetsensor einer Magnetsensoranordnung übertragbar ist.

Ein erfindungsgemäßer Flussleiter ist dadurch gekennzeichnet, dass der Flussleiter ferner eine mit der wenigstens einen Übertragungsfläche des Flussleiters magnetisch leitend gekoppelte, zweite Sammelfläche aufweist, die in einem funktionsgemäßen Verwendungszustand des Flussleiters in einer Drehmomentsensorvorrichtung zur Erzeugung bzw. zur zumindest teilweisen Bündelung und Weiterleitung eines zweiten magnetischen Stör-Flusses in Abhängigkeit von einem die Drehmomentsensorvorrichtung umgebenden Stör-Magnetfeld ausgebildet ist.

Des Weiteren ist ein erfindungsgemäßer Flussleiter dazu ausgebildet, zusammen mit einem anderen Flussleiter für eine erfindungsgemäße Flussleiteranordnung und/oder zusammen mit einem anderen Flussleiter für eine erfindungsgemäße Drehmomentsensorvorrichtung in einer erfindungsgemäßen Drehmomentsensorvorrichtung derart angeordnet zu werden, dass sich, wenn die Drehmomentsensorvorrichtung von einem Stör-Magnetfeld umgeben ist, ein in der ersten Sammelfläche des anderen Flussleiters zumindest teilweise gebündelter und über die wenigstens eine Übertragungsfläche des anderen Flussleiters übertragener, insbesondere an wenigstens einen Magnetsensor einer Magnetsensoranordnung übertragener, erster Stör-Fluss-Anteil und ein in der zweiten Sammelfläche des Flussleiters zumindest teilweise gebündelter und über die wenigstens eine Übertragungsfläche des Flussleiters übertragener, insbesondere an den Magnetsensor übertragener, zweiter Stör-Fluss-Anteil zumindest teilweise aufheben.

Sämtliche der mit Bezug auf eine Drehmomentsensorvorrichtung beschriebenen Merkmale und vorgestellten Ausführungsformen sowie jeweils deren Vorteile gelten jeweils entsprechend auch für eine erfindungsgemäße Flussleiteranordnung sowie für einen erfindungsgemäßen Flussleiter und umgekehrt, sofern dies technisch möglich bzw. ausführbar ist, auch wenn diese jeweils nur einmal im Zusammenhang mit nur einem von diesen Erfindungsgegenständen beschrieben sind.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in den Figuren jeweils erkennbar dargestellten und/oder in der Figurenbeschreibung genannten Merkmale und Merkmalskombinationen sind nicht nur in der jeweils angegebenen Kombination, sondern auch in anderen Kombinationen oder aber in Alleinstellung verwendbar, sofern sie technisch ausführbar sind.

Die Erfindung wird nun anhand mehrerer bevorzugter Ausführungsbeispiels unter Bezugnahme auf die beigefügten Zeichnungen näher erläutert, wobei funktionsgleiche Bauteile mit gleichen Bezugszeichen versehen sind. Es zeigen jeweils schematisch:
- **Fig. 1**: in perspektivischer Darstellung eine aus dem Stand der Technik bekannte, gattungsgemäße Drehmomentsensorvorrichtung, allerdings ohne eine zugehörige Magnetsensoranordnung,
- **Fig. 2**: die Drehmomentsensorvorrichtung aus Fig. 1 während des Betriebs unter dem Einfluss eines die Drehmomentsensorvorrichtung umgebenden Stör-Magnetfeldes,
- **Fig. 3**: einen Ausschnitt eines ersten Ausführungsbeispiels einer erfindungsgemäßen Drehmomentsensorvorrichtung in Seitenansicht mit einem ersten Ausführungsbeispiel einer erfindungsgemäßen Flussleiteranordnung mit zwei erfindungsgemäßen Flussleitern in schematischer Darstellung, ebenfalls ohne eine zugehörige Magnetsensoranordnung,
- **Fig. 4a**: einen Ausschnitt eines zweiten Ausführungsbeispiels einer erfindungsgemäßen Drehmomentsensorvorrichtung in perspektivischer Darstellung mit einem weiteren Ausführungsbeispiel einer erfindungsgemäßen Flussleiteranordnung mit zwei beispielhaften, alternativen erfindungsgemäßen Flussleitern, ebenfalls ohne eine zugehörige Magnetsensoranordnung,
- **Fig. 4b**: den zweiten Flussleiter der erfindungsgemäßen Flussleiteranordnung aus Fig. 4a in perspektivischer Darstellung,
- **Fig. 5a**: einen Ausschnitt eines dritten Ausführungsbeispiels einer erfindungsgemäßen Drehmomentsensorvorrichtung mit einem weiteren Ausführungsbeispiel einer erfindungsgemäßen Flussleiteranordnung mit zwei beispielhaften, weiteren alternativen erfindungsgemäßen Flussleitern, in diesem Fall mit zwei Magnetsensoren einer zugehörigen Magnetsensoranordnung,
- **Fig. 5b**: den zweiten Flussleiter aus Fig. 5a in perspektivischer Einzelteildarstellung,
- **Fig. 6a**: einen Ausschnitt eines weiteren Ausführungsbeispiels einer erfindungsgemäßen Drehmomentsensorvorrichtung mit einem weiteren Ausführungsbeispiel einer erfindungsgemäßen Flussleiteranordnung mit zwei Flussleitern in einer weiteren beispielhaften, erfindungsgemäßen möglichen Ausgestaltung,
- **Fig. 6b**: den ersten Flussleiter aus Fig. 6a in perspektivischer Einzelteildarstellung in einer ersten Ansicht,
- **Fig. 6c**: den ersten Flussleiter aus Fig. 6a und 6b in perspektivischer Einzelteildarstellung in einer anderen Ansicht,
- **Fig. 7a**: ein weiteres Ausführungsbeispiel einer erfindungsgemäßen Drehmomentsensorvorrichtung ohne eine entsprechende Magnetsensoranordnung in perspektivischer Darstellung mit einem weiteren Ausführungsbeispiel einer erfindungsgemäßen Flussleiteranordnung mit zwei jeweils erfindungsgemäß ausgebildeten Flussleitern in einer weiteren möglichen Ausgestaltung,
- **Fig. 7b**: den ersten erfindungsgemäßen Flussleiter aus Fig. 7a in perspektivischer Einzelteildarstellung,
- **Fig. 7c**: einen zweiten Teil des ersten Flussleiters aus den Figuren 7a und 7b in perspektivischer Einzelteildarstellung,
- **Fig. 7d**: einen ersten Teil des erfindungsgemäßen Flussleiters aus den Figuren 7a und 7b in perspektivischer Einzelteildarstellung,
- **Fig. 8a**: einen Ausschnitt eines weiteren Ausführungsbeispiels einer erfindungsgemäßen Drehmomentsensorvorrichtung in perspektivischer Darstellung mit einem weiteren Ausführungsbeispiel einer erfindungsgemäßen Flussleiteranordnung mit zwei jeweils erfindungsgemäß ausgebildeten Flussleitern in einer weiteren Ausgestaltung sowie mit 3 auf einer gemeinsamen Leiterplatte befestigten Magnetsensoren einer zugehörigen Magnetsensoranordnung,
- **Fig. 8b**: die Drehmomentsensorvorrichtung aus Fig. 8a in einer anderen perspektivischen Darstellung,
- **Fig. 8c**: die Drehmomentsensorvorrichtung aus den Fig. 8a und 8b nur mit dem ersten Flussleiter der erfindungsgemäßen Flussleiteranordnung,
- **Fig. 8d**: die Leiterplatte aus den Fig. 8a bis 8c mit den beiden darauf befestigten Magnetsensoren in perspektivischer Einzeldarstellung von schräg unten,
- **Fig. 9a**: ein weiteres Ausführungsbeispiel einer erfindungsgemäßen Flussleiteranordnung mit zwei erfindungsgemäßen Flussleitern mit einer Leiterplatte dazwischen mit zwei darauf angeordneten Magnetsensoren einer zugehörigen Magnetsensoranordnung für eine erfindungsgemäße Drehmomentsensorvorrichtung in perspektivischer Darstellung,
- **Fig. 9b**: die Flussleiteranordnung aus Fig. 9a in einer anderen perspektivischen Ansicht,
- **Fig. 9c**: den ersten Flussleiter aus den Fig. 9a und 9b sowie die Leiterplatte mit den beiden darauf befestigten Magnetsensoren in perspektivischer Darstellung von schräg unten,
- **Fig. 10**: ein weiteres Ausführungsbeispiel einer erfindungsgemäßen Drehmomentsensorvorrichtung mit einem weiteren Ausführungsbeispiel einer erfindungsgemäßen Flussleiteranordnung mit jeweils zwei erfindungsgemäß ausgebildeten Flussleitern in einer weiteren Ausgestaltung, ebenfalls ohne eine zugehörige Magnetsensoranordnung, und
- **Fig. 11**: ein weiteres Ausführungsbeispiel eines Ausschnitts einer erfindungsgemäßen Drehmomentsensorvorrichtung in Prinzipdarstellung mit einem weiteren Ausführungsbeispiel einer erfindungsgemäßen Flussleiteranordnung, diesmal jedoch nur mit jeweils einem erfindungsgemäß ausgebildeten Flussleiter in einer weiteren Ausgestaltung, ebenfalls ohne eine zugehörige Magnetsensoranordnung.

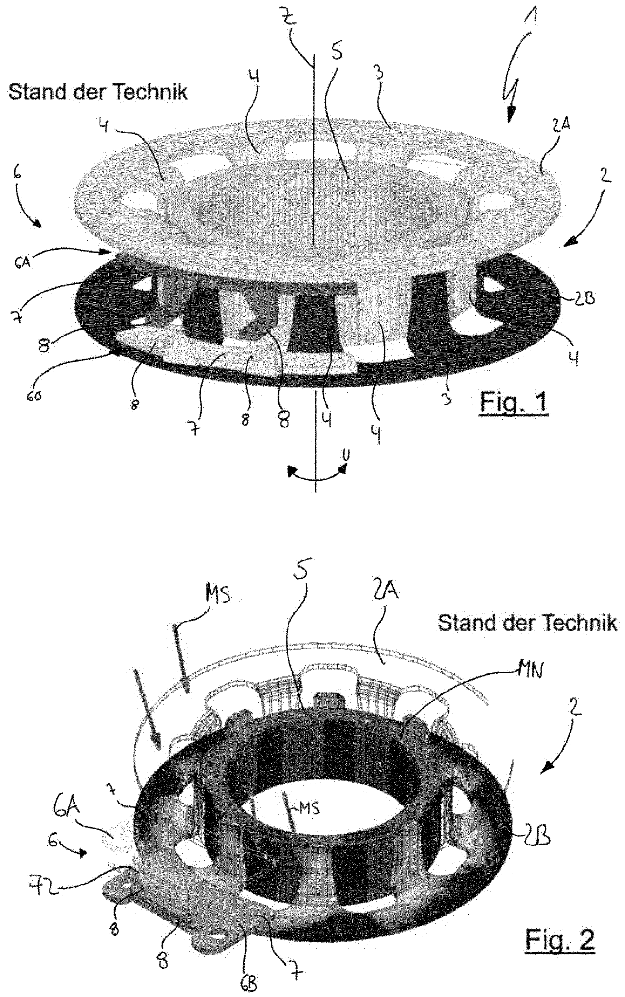

**Fig. 1** zeigt in perspektivischer Darstellung eine aus dem Stand der Technik bekannte, gattungsgemäße Drehmomentsensorvorrichtung 1, allerdings ohne eine zugehörige Magnetsensoranordnung, zum Erfassen eines auf eine Lenkwelle eines Kraftfahrzeugs aufgebrachten Drehmoments, wobei die Drehmomentsensorvorrichtung 1 eine Magnetanordnung 5, eine Statoranordnung 2 mit einem ersten Stator 2A und einem zweiten Stator 2B jeweils mit einem ringscheibenförmigen Statorkörper 3 und Statorlaschen 4, eine Flussleiteranordnung 6 mit einem ersten Flussleiter 6A und einem zweiten Flussleiter 6B aufweist sowie eine hier nicht dargestellten Magnetsensoranordnung.

Die Magnetanordnung 5 weist zum Erzeugen wenigstens eines Nutz-Magnetfeldes MN (vgl. Fig. 2) ein Magnetelement 5 in Form eines ringförmigen Permanentmagneten auf, welcher konzentrisch zu einer Zentrumsachse Z und zur Statoranordnung 2 angeordnet ist und drehfest auf einem ersten Teil einer hier nicht dargestellten Lenkwelle befestigt werden kann, während die Statoranordnung 2 drehfest mit einem zweiten Teil der Lenkwelle verbunden werden kann, sodass die Statoranordnung 2 relativ gegenüber dem Magnetelement 5 um die Zentrumsachse Z, welche insbesondere mit einer Rotationsachse der Lenkwelle zusammenfällt, in Umfangsrichtung U verdrehbar ist, wodurch ein magnetischer Fluss in der Statoranordnung 2, insbesondere im ersten Stator 2A sowie im zweiten Stator 2B erzeugt werden kann in Abhängigkeit von dem das auf die Lenkwelle aufgebrachte Drehmoment bestimmt werden kann.

Derartige Drehmomentsensorvorrichtungen sind aus dem Stand der Technik grundsätzlich bekannt, beispielsweise aus der DE 10 2013 006 379 A1 oder der EP 1 269 133 B1, auf welche zur näheren Beschreibung der funkgrundsätzlichen Funktionsweise einer solchen Drehmomentsensorvorrichtung 1 hiermit ausdrücklich verwiesen wird.

Zur zumindest teilweisen Bündelung und zur Weiterleitung des in der Statoranordnung 2 erzeugten magnetischen Flusses an die hier nicht dargestellten Magnetsensoranordnung zur Erzeugung eines entsprechenden Sensorsignals zur weiteren Auswertung, für die Bestimmung des Drehmoments ist eine Flussleiteranordnung 6 mit einem ersten Flussleiter 6A und einem zweiten Flussleiter 6B vorgesehen, wobei jeder der Flussleiter 6A bzw. 6B jeweils eine Sammelfläche 7 und in diesem Fall jeweils zwei Übertragungsflächen 8 aufweist. Über die Sammelflächen 7 erfolgt jeweils die Bündelung des in der Statoranordnung 2 erzeugten magnetischen Flusses und über die Übertragungsflächen 8 jeweils die Übertragung an die Magnetsensoranordnung, in diesem Fall insbesondere jeweils an einen ersten, parallel zu den Übertragungsflächen 8 anordbaren Magnetsensor und einen zweiten parallel zur der anderen Übertragungsfläche 8 und mit dem ersten Magnetsensor in einer Ebene anordbaren Magnetsensor, wobei die Übertragungsflächen 18 jeweils einen hier nicht näher bezeichneten, axialen Spalt bilden, in welchem jeweils ein Magnetsensor der Magnetsensoranordnung zwischen den Übertragungsflächen 8 angeordnet werden kann.

**Fig. 2** zeigt eine ähnliche Drehmomentsensorvorrichtung 1 zu der Drehmomentsensorvorrichtung aus Fig. 1 während des Betriebs unter dem Einfluss eines die Drehmomentsensorvorrichtung 1 umgebenden Stör-Magnetfeldes MS, wobei in diesem Fall die Magnetanordnung 5, welche das zur Bestimmung des Drehmoments erforderliche Nutz-Magnetfeld MN erzeugt und die Statoranordnung 2 identisch zur der Drehmomentsensorvorrichtung 1 aus Fig. 1 ausgebildet sind, die Flussleiteranordnung 6 jedoch eine andere Geometrie aufweist, wobei insbesondere der erste Flussleiter 6A und der zweite Flussleiter 6B, insbesondere deren Sammelflächen 7 sowie deren Übertragungsflächen 8, eine andere Geometrie aufweisen. Das Funktionsprinzip der Flussleiteranordnung 6 ist jedoch gleich und unterscheidet sich nicht von der in Fig. 1 dargestellten Drehmomentsensorvorrichtung 1.

Wird nun während eines Betriebs die Statoranordnung 2 in Umfangsrichtung relativ zum Magnetelement 5 um die Zentrumsachse Z verdreht, wird in Abhängigkeit von dem Nutz-Magnetfeld MN, das von dem Magnetelement 5 erzeugt wird, ein magnetischer Fluss in den beiden Statoren 2A und 2B der Statoranordnung 2 erzeugt, welcher jeweils in den Sammelflächen 7 der beiden Flussleiter gebündelt und in die zugehörigen Übertragungsflächen 8 geleitet wird.

Ist die Drehmomentsensorvorrichtung 1 dabei von einem Stör-Magnetfeld MS umgeben, in einem Elektrofahrzeug beispielsweise von einem durch den Elektromotor erzeugten Stör-Magnetfeld, wird in der Statoranordnung 2 bzw. insbesondere im ersten Stator 2A und/oder im zweiten Stator 2B jeweils auch ein magnetischer Stör-Fluss in Abhängigkeit von diesem Stör-Magnetfeld MS erzeugt, welche in den beiden Flussleitern 6A und 6B, insbesondere in deren Sammelflächen 7, mitgebündelt und ebenfalls mit an die Übertragungsflächen 8 geleitet wird.

Je nachdem wie das Nutz-Magnetfeld MN und das Stör-Magnetfeld MS orientiert sind, ist jeweils eine zugehörige Flussrichtung des in den Statoren 2A und 2B sowie in den Flussleitern 6A und 6B erzeugten magnetischen Flusses orientiert. Die einzelnen magnetischen Flüsse F1 und F2 (wobei in Fig. 2 nur F2 dargestellt ist) aus den Übertragungsflächen 8 des ersten und zweiten Flussleiters 6A bzw. 6B addieren sich dabei im Spalt zwischen den Übertragungsflächen vektoriell zu einem resultierenden magnetischen Fluss, welcher an einen in dem axialen Spalt zwischen den Übertragungsflächen 8 angeordneten Magnetsensor übertragen werden kann, wobei in diesem Fall mit Flussrichtung nach oben nur der vom zweiten Flussleiter 6B gebündelte und übertragene magnetische Fluss F2 dargestellt ist, was in Fig. 2 durch die Pfeile symbolisiert ist.

Je nachdem wie das Nutz-Magnetfeld MN und das Stör-Magnetfeld MS orientiert sind, vergrößert oder verkleinert das Stör-Magnetfelds MS dabei jeweils den magnetischen Fluss, der über die einzelnen Übertragungsflächen 8 an eine zugehörige Magnetsensoranordnung zur Auswertung übertragen wird, wodurch das Sensorsignal beeinflusst bzw. verfälscht wird und damit das zu bestimmende Drehmoment. D.h. je nach Betrag und Richtung des aus dem Stör-Magnetfeld MS resultierenden magnetischen Flusses kommt es zu einer mehr oder weniger großen Beeinflussung bzw. Verfälschung des Drehmomentsignals, da dieses aus dem resultierenden magnetischen Fluss im Spalt bestimmt wird und nicht nur rein aus dem vom Nutz-Magnetfeld MN abhängigen erzeugten magnetischen Fluss.

Dies führt insbesondere bei der Verwendung der Drehmomentsensorvorrichtung in einer Umgebung, in welcher ein oder mehrere Stör-Magnetfelder MS das Nutz-Magnetfeld MN der Magnetanordnung mit dem Magnetelement 5 überlagern, beispielsweise in Hybrid- und/oder Elektrofahrzeugen mit einem Elektromotor zu einer Verfälschung des mithilfe der Drehmomentsensorvorrichtung 1 ermittelten Drehmomentsignals.

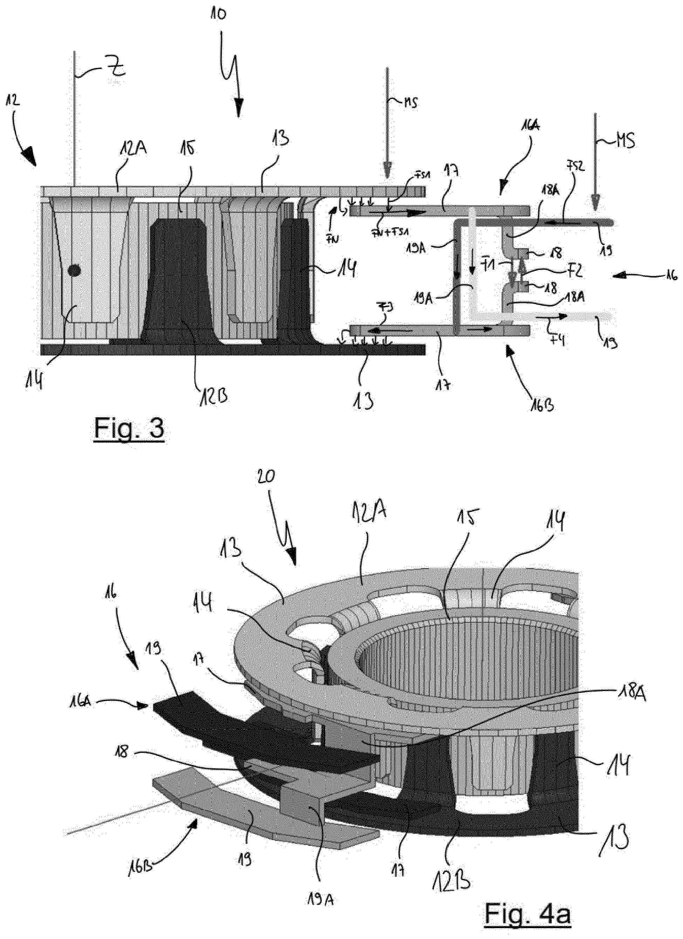

**Fig. 3** zeigt einen Ausschnitt eines ersten Ausführungsbeispiels einer erfindungsgemäßen Drehmomentsensorvorrichtung 10 in Seitenansicht mit einem ersten Ausführungsbeispiel einer erfindungsgemäßen Flussleiteranordnung 16 mit zwei erfindungsgemäßen Flussleitern 16A und 16B, insbesondere einem ersten Flussleiter 16A und einem zweiten Flussleiter 16B, in schematischer Darstellung, ebenfalls ohne eine zugehörige Magnetsensoranordnung.

Die Drehmomentsensorvorrichtung 10 weist ebenfalls eine Statoranordnung 12 mit einem ersten Stator 12A, einem zweiten Stator 12B und eine Magnetanordnung 15 mit einem Permanent-Ringmagneten 15 als Magnetelement auf, wobei die beiden Statoren 12A und 12B ebenfalls einen ringscheibenförmigen Statorkörper 13 und jeweils entsprechende Laschen 14 aufweisen, die jeweils kammartig in Umfangsrichtung zueinander angeordnet sind und in axialer Richtung versetzt ineinandergreifen, und die Statoranordnung 12 relativ in Umfangsrichtung U gegenüber dem Magnetelement 15 um die Zentrumsachse Z verdrehbar ist.

Dabei weisen der erste Flussleiter 16A und der zweite Flussleiter 16B neben einer ersten Sammelfläche 17 und einer jeweils zugehörigen Übertragungsfläche 18 jeweils eine zweite Sammelfläche 19 auf, wobei die erste Sammelfläche 17 des ersten Flussleiters 16A dabei dazu ausgebildet sind, einen ersten magnetischen Fluss mit einem Nutz-Fluss-Anteil FN, der abhängig vom Nutz-Magnetfeld MN bzw. einem aufgebrachten Drehmoment ist, und einem ersten Stör-Fluss-Anteil FS1, der von dem die Drehmomentsensorvorrichtung 10 umgebenden Stör-Magnetfeld MS abhängig ist, zu bündeln und über die zugehörige Übertragungsfläche 18 in den von den Übertragungsflächen 18 gebildeten Spalt zu übertragen.

Über die erfindungsgemäß vorgesehene zweite Sammelfläche 19 des zweiten Flussleiters 16B wird bei einem externen Stör-Magnetfeld MS mit einer Orientierung wie in Fig. 3 dargestellt, ein zweiter magnetischer Stör-Fluss FS2 im zweiten Flussleiter 16B erzeugt, der über einen sich in diesem Fall parallel zur Zentrumsachse Z erstreckenden Verbindungsabschnitt 19A sowie über einen Teil der ersten Sammelfläche 17 des zweiten Flussleiters 16B in die Übertragungsfläche 18 des zweiten Flussleiters 16B und von dort als zweiter Stör-Fluss-Anteil FS2 eines zweiten, vom zweiten Flussleiter 16B gebündelten magnetischen Flusses F2, in den Spalt übertragen wird.

Erfindungsgemäß sind der erste Flussleiter 16A und der zweite Flussleiter 16B jeweils derart ausgebildet und derart relativ zueinander angeordnet, dass sich der in der ersten Sammelfläche 17 des ersten Flussleiters 16A zumindest teilweise gebündelte und über die wenigstens eine Übertragungsfläche 18 des ersten Flussleiters 16A in den Spalt übertragener erste Stör-Fluss-Anteil FS1 des ersten magnetischen Flusses F1, und ein in der zweiten Sammelfläche 19 des zweiten Flussleiters 16B zumindest teilweise gebündelter und über die Übertragungsfläche 18 des zweiten Flussleiters 16B in den Spalt übertragener zweiter Stör-Fluss-Anteil FS2 des zweiten magnetischen Flusses F2 zumindest teilweise gegenseitig aufheben. Hierdurch kann der Stör-Fluss-Anteil FS1 des ersten magnetischen Flusses F1 reduziert bzw. sogar vollständig eliminiert werden, wodurch eine unerwünschte Beeinflussung des von der Drehmomentsensorvorrichtung 10 erzeugten Sensorsignals durch das Stör-Magnetfeld reduziert bzw. vermieden werden kann.

Über die Übertragungsfläche 18 des zweiten Flussleiters 16B sowie die erste Sammelfläche 17 des zweiten Flussleiters 16B kann der verbleibende Teil des ersten magnetischen Flusses F1 aus dem ersten Flussleiter 16A zurück in die Statoranordnung geleitet werden (hier mit F3 bezeichnet), insbesondere der verbleibende Nutz-Fluss FN.

Dadurch, dass der erste Flussleiter 16A ebenfalls eine zweite Sammelfläche 19 aufweist, kann ferner eine Einkopplung zweiten Stör-Fluss-Anteils FS2, der über die Übertragungsfläche 18 des zweiten Flussleiters in den Spalt übertragen und von dort über die Übertragungsfläche 18 in den ersten Flussleiter 16A geleitet wird, über die erste Sammelfläche 17 des ersten Flussleiters 16A vermieden werden, da der verbleibende zweite Stör-Fluss-Anteil FS2 über den Verbindungsabschnitt 19A und die zweite Sammelfläche 19 des ersten Flussleiters 16A in die Umgebung zurückgeführt werden kann (hier mit F3 bezeichnet).

Zur Übertragung des zweiten Stör-Fluss-Anteils FS2 in den Spalt derart, dass sich der erste Stör-Fluss-Anteil FS1 und der zweite Stör-Fluss-Anteil FS2 im Spalt aufheben, sind insbesondere die ersten und zweiten Sammelflächen 17 bzw. 19 sowie die Übertragungsflächen 18 des ersten Flussleiters 16A und des zweiten Flussleiters 16B jeweils derart angeordnet und relativ zueinander orientiert und jeweils über zugehörige Verbindungsabschnitte 18A bzw. 19A derart magnetisch leitend miteinander gekoppelt, dass der erste Stör-Fluss-Anteil FS1 und der zweite Stör-Fluss-Anteil FS2 mit entgegengesetzten Richtungen in den Spalt übertragen werden.

Dies wird vorliegend insbesondere dadurch erreicht, dass die zweiten Sammelflächen 19 jeweils parallel zu den ersten Sammelflächen 17 des jeweiligen Flussleiters 16A bzw. 16B angeordnet sind, jedoch in einer parallelen Ebene zu diesen, d.h. jeweils in axialer Richtung versetzt zur ersten Sammelfläche 17, und insbesondere auf einer anderen Seite der Übertragungsfläche 18 des zugehörigen Flussleiters 16A bzw. 16B. Die ersten und zweiten Sammelflächen 17 bzw. 19 beider Flussleiter 16A und 16B sowie deren Übertragungsflächen 18 erstrecken sich dabei alle jeweils im Wesentlichen platten- oder scheibenförmig in einer sich senkrecht zur Zentrumsachse Z erstreckenden Ebene.

Dadurch wird im zweiten Flussleiter 16B jeweils ein vom Stör-Magnetfeld MS abhängiger zweiter Stör-Fluss-Anteil F2 erzeugt, welcher im Spalt eine entgegengesetzte Richtung zu dem in Abhängigkeit vom Stör-Magnetfeld MS erzeugten, ersten Stör-Fluss-Anteil FS1 aufweist. Dadurch kann bereits in den beiden Flussleitern 16A und 16B und insbesondere bereits vor einer Übertragung an eine zugehörige Magnetsensoranordnung sowie ohne zusätzliche Magnetelemente oder dergleichen jeweils eine Reduzierung und bei entsprechender Ausgestaltung der Flussleiter passend zum Stör-Magnetfeld MS eine zumindest teilweise, in einigen Fällen (abhängig von der Stärke und Orientierung des externen Stör-Magnetfeldes MS und der Größe der Sammelflächen 17 und 19, insbesondere abhängig vom Größenverhältnis der zweiten Sammelflächen 19 zu den ersten Sammelflächen 17) sogar eine vollständige Kompensation des in den ersten Sammelflächen 17 in Abhängigkeit vom Stör-Magnetfeld MS gebündelten ersten Stör-Flusses FS1 erreicht werden.

Um zu vermeiden, dass in den zweiten Sammelflächen 19 auch ein magnetischer Fluss in Abhängigkeit von dem Nutz-Magnetfeld MN erzeugt wird und somit auch ein Anteil des in den ersten Sammelflächen 17 in Abhängigkeit von dem Nutz-Magnetfeld MN erzeugten und gebündelten magnetischen Flusses kompensiert wird, befinden sich bei diesem Ausführungsbeispiel die zweiten Sammelflächen 19 in radialer Richtung außerhalb der Statoranordnung 12, wohingegen sich die ersten Sammelflächen 17, deren Aufgabe es insbesondere ist, den in Abhängigkeit vom Nutz-Magnetfeld MN in der Statoranordnung 12 erzeugten magnetischen Fluss zu bündeln, in radialer Richtung innerhalb der Statoranordnung 12 befinden und insbesondere mit diesen in radialer Richtung vollständig überlappen.

Sowohl der erste Flussleiter 16A als auch der zweite Flussleiter 16B sind bei diesem Beispiel in axialer Richtung jeweils innerhalb der Statoranordnung angeordnet, d.h. sie ragen nicht in axialer Richtung nach oben oder unten über die Statoranordnung hinaus. Hierdurch kann eine besonders kompakte Bauweise in axialer Richtung erreicht werden.

Dies ist grundsätzlich jedoch möglich, wobei in diesem Fall bevorzugt wenigstens eine zweite Sammelfläche 19 in axialer Richtung oberhalb oder unterhalb der Statoranordnung angeordnet sein kann. Ist die zweite Sammelfläche 19 dabei mit einem ausreichenden Abstand in axialer Richtung, insbesondere mit einem definierten Mindest-Abstand zur Statoranordnung 12 angeordnet, kann die zweite Sammelfläche 19 in radialer Richtung ebenfalls innerhalb der Statoranordnung 12 angeordnet sein und zumindest vollständig oder teilweise mit dieser in radialer Richtung überlappen. Hierdurch lässt sich eine zwar in axialer Richtung weniger kompakte Drehmomentsensorvorrichtung bereitstellen, aber eine in radialer Richtung besonders kompakte Drehmomentsensorvorrichtung.

Sowohl die ersten Sammelflächen 17 als auch die zweiten Sammelflächen 19 der beiden Flussleiter 16A und 16B sind bei dem in Fig. 3 abgebildeten Ausführungsbeispiel insbesondere jeweils ringscheibensegmentförmig ausgebildet.

Für vorteilhafte magnetische Eigenschaften sind beide Flussleiter 16A und 16B bei diesem Ausführungsbeispiel, wie auch allgemein aus dem Stand der Technik bekannt, jeweils aus weichmagnetischen Material hergestellt und insbesondere jeweils als Stanzbiegeteile ausgebildet.

Eine Größe der zweiten Sammelflächen 19 ist in diesem Fall dabei insbesondere jeweils derart gewählt, dass sie etwa jeweils das 1,5 fache der Fläche der ersten Sammelfläche 17 des zugehörigen Flussleiters 16A bzw. 16B beträgt. Die Größe der zweiten Sammelfläche 19 des ersten und/oder zweiten Flussleiters 16A, 16B kann aber statt in Abhängigkeit von der Größe der ersten Sammelfläche des zugehörigen Flussleiters 16A, 16B auch in Abhängigkeit von der Größe der ersten Sammelfläche 17 des anderen Flussleiters 16B gewählt sein. Hierdurch kann bei entsprechend geeignet gewählter Größe eine besonders gute, insbesondere eine fast vollständige oder vollständige Kompensation eines in Abhängigkeit von dem Stör-Magnetfeld MS entstandenen ersten Stör-Fluss-Anteils FS1 erreicht werden.

**Fig. 4a** zeigt einen Ausschnitt eines zweiten Ausführungsbeispiels einer erfindungsgemäßen Drehmomentsensorvorrichtung 20 in perspektivischer Darstellung mit einem weiteren Ausführungsbeispiel einer erfindungsgemäßen Flussleiteranordnung 16 mit zwei beispielhaften, alternativen erfindungsgemäßen Flussleitern 16A und 16B, ebenfalls ohne eine zugehörige Magnetsensoranordnung, wobei bei diesem Ausführungsbeispiel die ersten und zweiten Sammelflächen 17 bzw. 19 jeweils über einen sich in Umfangsrichtung und in axialer Richtung erstreckenden Verbindungsabschnitt 18A bzw. 19A mit der Übertragungsfläche 18 magnetisch leitend verbunden sind und über die Verbindungsabschnitte 18A und 19A sowie die Übertragungsfläche 18 jeweils miteinander magnetisch leitend miteinander verbunden sind. Die Größe der zweiten Sammelflächen 19 entspricht dabei in diesem Fall jeweils etwa der Größe der Fläche der ersten Sammelflächen 17.

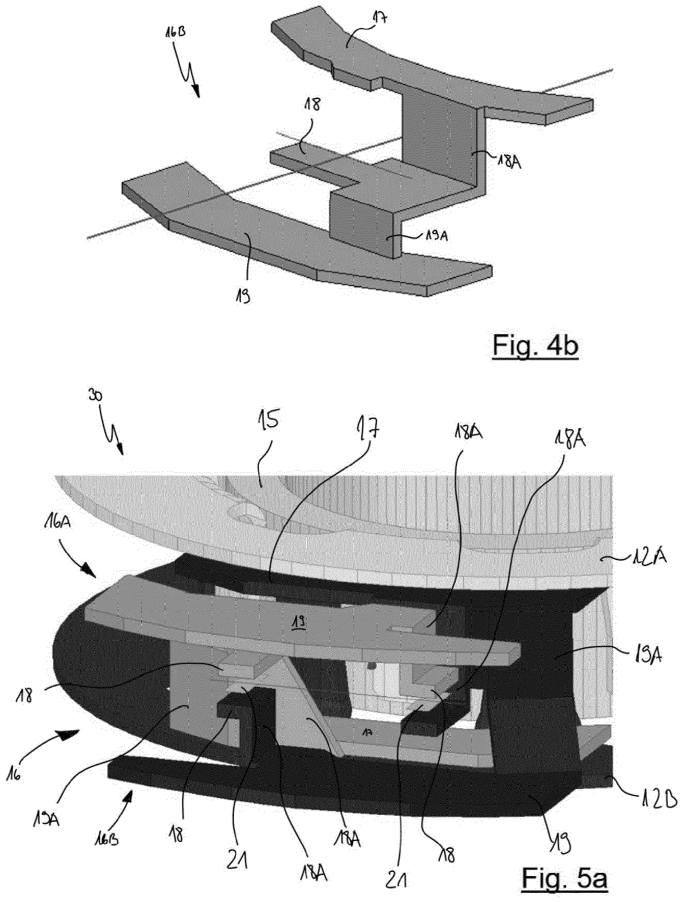

Anhand von **Fig. 4b****,** welche den zweiten Flussleiter 16B der erfindungsgemäßen Flussleiteranordnung aus Fig. 4a in perspektivischer Darstellung zeigt, ist insbesondere gut die ringscheibensegmentförmige Ausgestaltung der ersten Sammelfläche 17 sowie der zweiten Sammelfläche 19 erkennbar. Ebenfalls ist die Anordnung der Übertragungsfläche 18 in einer Ebene zwischen der ersten Sammelfläche 17 und der zweiten Sammelfläche 19 erkennbar bzw. die Anordnung der beiden Sammelflächen 17 und 19 auf verschiedenen Seiten in axialer Richtung von der Übertragungsfläche 18 sowie, dass sich die erste Sammelfläche 17 und die zweite Sammelfläche 19 jeweils in parallelen und jeweils senkrecht auf der Zentrumsachse Z stehenden Ebenen erstrecken.

**Fig. 5a** zeigt einen Ausschnitt eines dritten Ausführungsbeispiels einer erfindungsgemäßen Drehmomentsensorvorrichtung 30 mit einem weiteren Ausführungsbeispiel einer erfindungsgemäßen Flussleiteranordnung 16 mit zwei beispielhaften, weiteren alternativen erfindungsgemäßen Flussleitern 16A und 16B, in diesem Fall mit zwei Magnetsensoren 21 einer zugehörigen Magnetsensoranordnung. Die beiden Flussleiter 16A und 16B sind bei diesem Ausführungsbeispiel dabei ineinander verschachtelt angeordnet, insbesondere in Umfangsrichtung U ineinandergreifend bzw. ineinandergeschoben angeordnet. Im Unterschied zu dem Beispiel aus den Fig. 4a und 4b weisen bei diesem Ausführungsbeispiel sowohl der erste Flussleiter 16A als auch der zweite Flussleiter 16B jeweils nicht eine geschlossene, einteilige Übertragungsfläche 18 auf, sondern es sind jeweils zwei einzelne, separate Übertragungsflächen 18 vorgesehen, wobei die Übertragungsflächen 18 des ersten Flussleiters 16A jeweils über entsprechende Verbindungsabschnitte 18A mit der zweiten Sammelfläche gekoppelt sind. Bei dem zweiten Flussleiter 16B hingegen ist eine der beiden Übertragungsflächen 18, in diesem Fall die in der Darstellung in Fig. 5a linke Übertragungsfläche 18, mit der zweiten Sammelfläche 19 verbunden und die andere, rechte Übertragungsfläche 18 mit der ersten Sammelfläche 17, beide ebenfalls jeweils über einen zugehörigen Verbindungsabschnitt 18A.

Die beiden Übertragungsflächen 18 des ersten Flussleiters 16A sind dabei jeweils gegenüberliegend zu den Übertragungsflächen 18 des zweiten Flussleiters 16B angeordnet und bilden mit diesen einen hier nicht näher bezeichneten axialen Spalt, welcher zur Anordnung der hier nur schematisch angedeuteten Magnetsensoren 21 ausgebildet ist.

Die Sammelflächen 17 und 19 sowie die Übertragungsflächen 18 sind ebenfalls über entsprechende Verbindungsabschnitte 18A und 19A, welche ebenfalls magnetisch leitend ausgebildet sind, magnetisch leitend miteinander gekoppelt bzw. verbunden, sodass im Ergebnis über die Übertragungsflächen 18 jeweils ein magnetischer Fluss an die jeweiligen Magnetsensoren 21 zur Bestimmung eines jeweils auf die Drehmomentsensorvorrichtung 30 aufgebrachten Drehmoments übertragen werden kann.

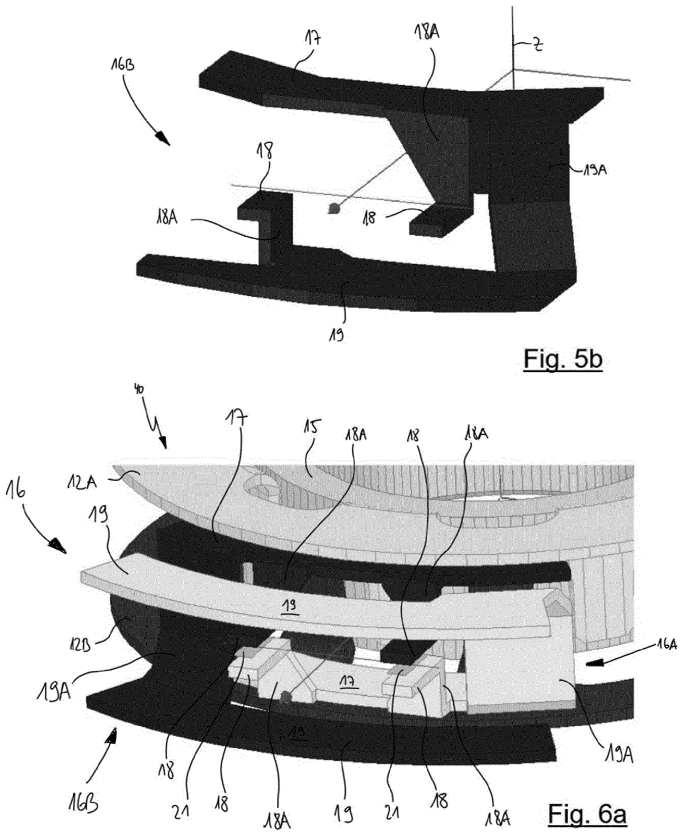

**Fig. 5b** zeigt den zweiten Flussleiter 16B aus Fig. 5a in perspektivischer Einzelteildarstellung, wobei in dieser Darstellung insbesondere gut die einzelnen Verbindungsabschnitte 18A und 19A erkennbar sind, sowie die parallele Anordnung der ersten und zweiten Sammelflächen 17 bzw. 19 und der Übertragungsflächen 18.

Die Übertragungsflächen 18 sind dabei derart ausgebildet und angeordnet, dass die zugehörigen Magnetsensoren 21 in einer gemeinsamen Ebene und insbesondere auf einer gemeinsamen, hier nicht dargestellten Leiterplatte angeordnet werden können, wodurch sich eine besonders vorteilhafte Bauweise einer erfindungsgemäßen Drehmomentsensorvorrichtung 30 ergibt.

**Fig. 6a** zeigt einen Ausschnitt eines weiteren Ausführungsbeispiels einer erfindungsgemäßen Drehmomentsensorvorrichtung 40 mit einem weiteren Ausführungsbeispiel einer erfindungsgemäßen Flussleiteranordnung 16 mit zwei Flussleitern 16A und 16B in einer weiteren beispielhaften, erfindungsgemäßen möglichen Ausgestaltung, wobei bei diesem Ausführungsbeispiel einer erfindungsgemäßen Drehmomentsensorvorrichtung 40 die beiden Flussleiter 16A und 16B ebenfalls einteilig ausgebildet sind, im Unterschied zu dem anhand der Fig. 5a und 5b beschriebenen Ausführungsbeispiel jedoch als Gleichteile, welche lediglich um 180° verdreht angeordnet sind. Hierdurch ergibt sich eine besonders einfach herzustellende und kostengünstig bereitzustellende Drehmomentsensorvorrichtung 40.

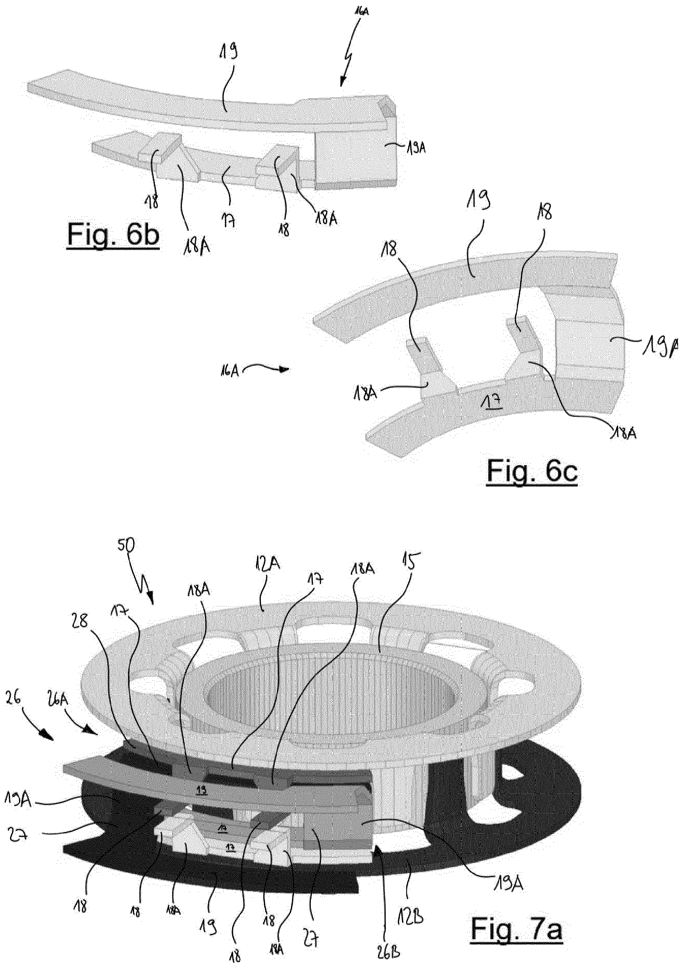

**Fig. 6b** zeigt den ersten Flussleiter aus Fig. 6a in perspektivischer Einzelteildarstellung in einer ersten Ansicht und **Fig. 6c** den ersten Flussleiter aus den Fig. 6a und 6b in perspektivischer Einzelteildarstellung in einer anderen Ansicht, wobei anhand dieser Darstellung die einzelnen Funktionsflächen 17, 19 und 18 sowie die Verbindungsabschnitte 18A, 19A und ihre Ausgestaltung und Anordnung relativ zueinander gut erkennbar ist.

**Fig. 7a** zeigt ein weiteres Ausführungsbeispiel einer erfindungsgemäßen Drehmomentsensorvorrichtung 50 mit einem weiteren Ausführungsbeispiel einer erfindungsgemäßen Flussleiteranordnung 26 mit zwei jeweils erfindungsgemäß ausgebildeten Flussleitern 26A und 26B in einer weiteren möglichen Ausgestaltung, wobei dieses Ausführungsbeispiel einer erfindungsgemäßen Drehmomentsensorvorrichtung 50 eine erfindungsgemäße Flussleiteranordnung 26 mit einem zweiteilig ausgebildeten ersten Flussleiter 26A und einem zweiteilig ausgebildeten zweiten Flussleiter 26B aufweist.

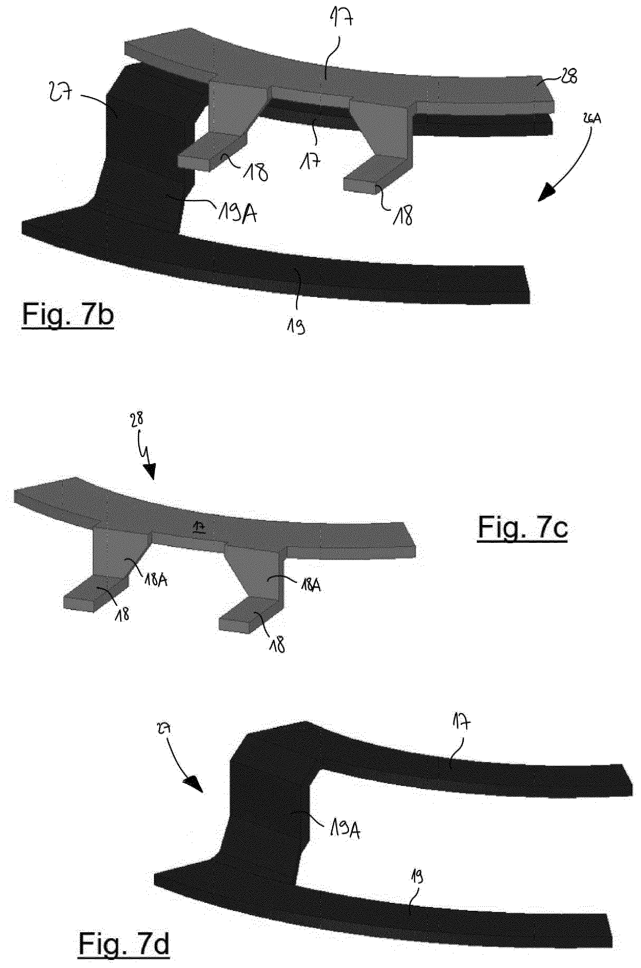

Dabei sind die beiden Flussleiter 26A und 26B jeweils aus einem ersten Flussleiter-Teil 27 und einem zweiten Flussleiter-Teil 28 zusammengesetzt, welche jeweils als Stanzbiegeteile aus einem weichmagnetischen Material hergestellt sind. Anhand der **Fig. 7b** bis **7d** sind die Einzelheiten des Flussleiters 26A gut zu erkennen, wobei **Fig. 7b** den zusammengesetzten Flussleiter 26A aus Fig. 7a in perspektivischer Einzelteildarstellung zeigt, Fig. 7c den zweiten Teil 28 in perspektivischer Einzelteildarstellung und Fig. 7d den ersten Teil 27.

Der zweite Flussleiter-Teil 28 umfasst dabei jeweils die erste Sammelfläche 17 sowie die Übertragungsflächen 18 und der erste Flussleiter-Teil 27 jeweils die zweite Sammelfläche 19. Zur magnetischen Kopplung der zweiten Sammelfläche 19 mit der ersten Sammelfläche 17 im zusammengesetzten Zustand weist der erste Teil 27 einen Verbindungsabschnitt 19A sowie eine hier nicht näher bezeichnete Kopplungsfläche auf, welche unmittelbar benachbart zur ersten Sammelfläche 17 angeordnet werden kann, insbesondere überlappend oder kongruent mit der ersten Sammelfläche 17 und vor allem diese flächig kontaktierend und somit magnetisch und elektrisch leitend.

Ein derartiger, mehrteiliger Flussleiter ermöglicht einen modularen Aufbau eines erfindungsgemäßen Flussleiters und damit eine besonders flexible Anpassung an die Einsatzbedingungen, insbesondere eine besonders flexible Anpassung der Ausgestaltung der zweiten Sammelfläche je nach Bedarf. Hierdurch kann z.B. insbesondere eine Größe der zweiten Sammelfläche je nach Bedarf angepasst werden. Hierdurch kann für verschiedene Anwendungsfälle eine besonders gute Reduzierung bzw. Kompensation eines erzeugten Stör-Flusses erreicht werden und somit im Ergebnis eine gegen Stör-Magnetfelder besonders robuste Drehmomentsensorvorrichtung bereitgestellt werden.

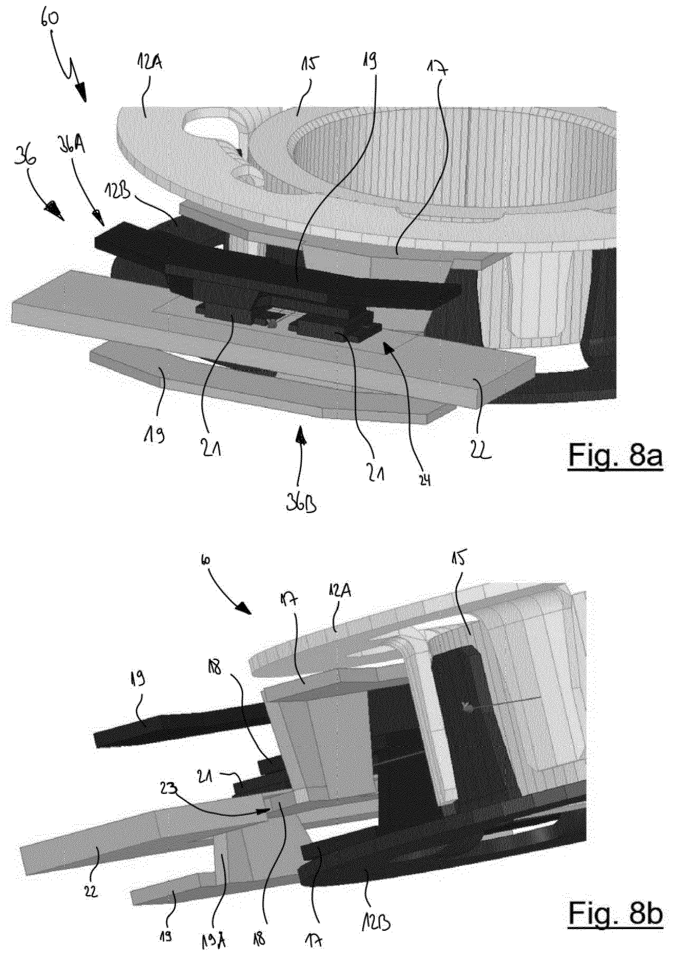

**Fig. 8a** zeigt einen Ausschnitt eines weiteren Ausführungsbeispiels einer erfindungsgemäßen Drehmomentsensorvorrichtung 60 in perspektivischer Darstellung mit einem weiteren Ausführungsbeispiel einer erfindungsgemäßen Flussleiteranordnung 36 mit zwei jeweils erfindungsgemäß ausgebildeten Flussleitern 36A und 36B in einer weiteren Ausgestaltung sowie mit zwei auf einer gemeinsamen Leiterplatte 22 befestigten Magnetsensoren 21 einer zugehörigen Magnetsensoranordnung, wobei die Flussleiter 36A und 36B in diesem Fall ebenfalls einteilig ausgebildet sind, aber wiederum eine andere Ausgestaltung aufweisen als die zuvor beschriebenen Flussleiter.

Die beiden Magnetsensoren 21 sind dabei jeweils als 2-D-Hall-Magnetsensoren ausgebildet und auf einer gemeinsamen Leiterplatte 22 in einer gemeinsamen Ebene und jeweils in einem axialen Spalt zwischen den Übertragungsflächen 18 des ersten Flussleiters 36A und des zweiten Flussleiters 36B angeordnet.

Für eine besonders kompakte Bauweise in axialer Richtung, insbesondere eine besonders geringe Bauhöhe der Drehmomentsensorvorrichtung 60 in axialer Richtung, weist die Leiterplatte 22 in einem Bereich 24 um die beiden Magnetsensoren 21 herum eine reduzierte Dicke auf, welche insbesondere durch eine Aussparung 23 an der Unterseite der Leiterplatte 22 bewirkt ist, was insbesondere anhand der **Fig. 8b** bis **8d** gut erkennbar ist.

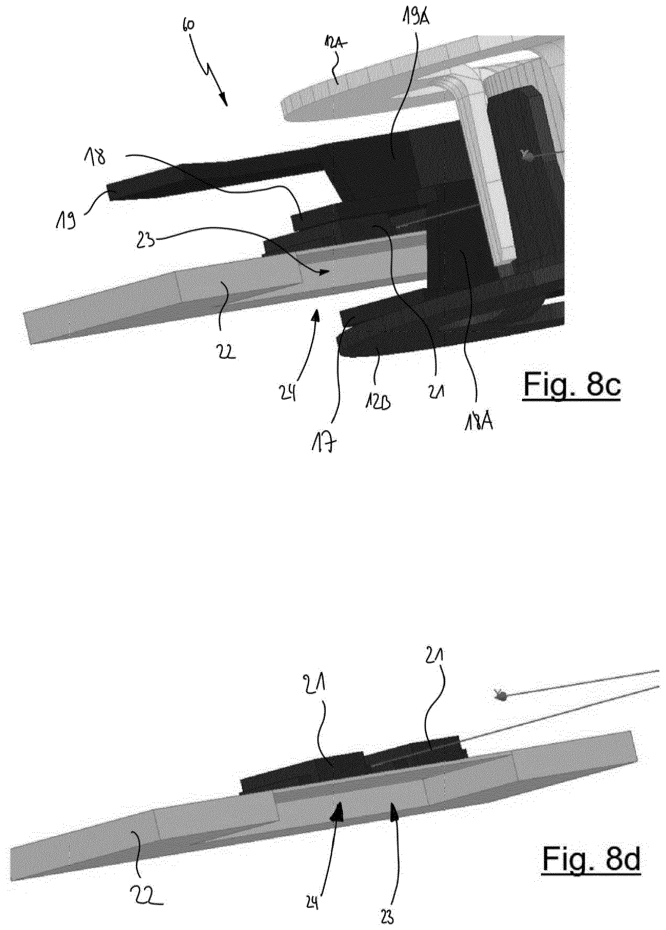

Fig. 8b zeigt dabei die Drehmomentsensorvorrichtung 60 aus Fig. 8a in einer anderen perspektivischen Darstellung, Fig. 8c die Drehmomentsensorvorrichtung 60 nur mit dem ersten Flussleiter 36A und Fig. 8d die Leiterplatte 22 mit den beiden darauf befestigten Magnetsensoren 21 in perspektivischer Einzeldarstellung von schräg unten.

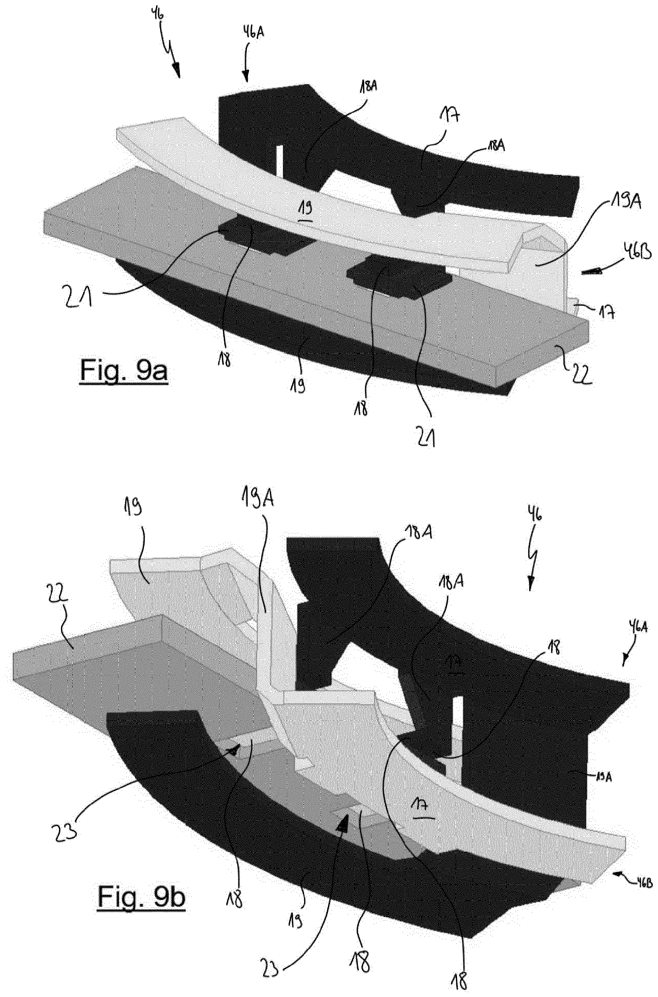

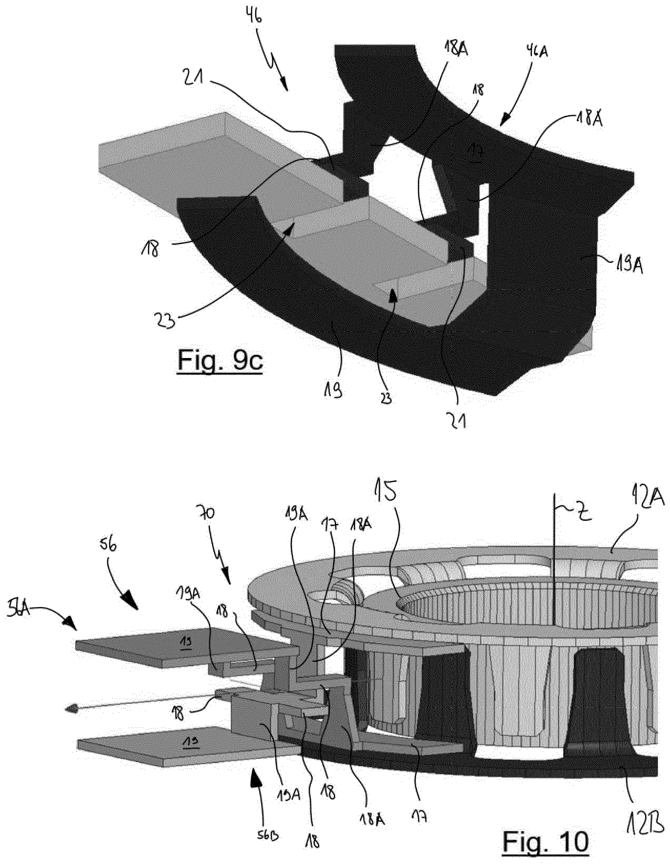

**Fig. 9a** zeigt ein weiteres Ausführungsbeispiel einer erfindungsgemäßen Flussleiteranordnung 46 mit zwei erfindungsgemäßen Flussleitern 46A und 46B mit einer Leiterplatte 22 dazwischen mit zwei darauf angeordneten Magnetsensoren 21 einer zugehörigen Magnetsensoranordnung für eine erfindungsgemäße Drehmomentsensorvorrichtung in perspektivischer Darstellung. **Fig. 9b** zeigt die Flussleiteranordnung 46 in einer anderen perspektivischen Ansicht. Bei diesem Ausführungsbeispiel weist die Leiterplatte 22 im Unterschied zu dem vorher anhand der Fig. 8a bis 8d beschriebenen Ausführungsbeispiel für eine kompakte Bauweise in axialer Richtung nicht eine große Aussparung 23 an ihrer Unterseite auf, sondern jeweils zwei einzelne Aussparungen 23 bzw. Nuten 23 bzw. Ausnehmungen 23, in welche jeweils die Übertragungsflächen 18 des zweiten, in diesem Fall unteren, Flussleiters 46B von unten hineinragen. Anhand von **Fig. 9c****,** welche den ersten Flussleiter 46A aus den Fig. 9a und 9b sowie die Leiterplatte 22 mit den beiden darauf befestigten Magnetsensoren 21 in perspektivischer Darstellung von schräg unten zeigt, sind die Aussparungen 23 in der Leiterplatte 22 besonders gut erkennbar.

**Fig. 10** zeigt ein weiteres Ausführungsbeispiel einer erfindungsgemäßen Drehmomentsensorvorrichtung 70 mit einem weiteren Ausführungsbeispiel einer erfindungsgemäßen Flussleiteranordnung 56 mit jeweils zwei erfindungsgemäß ausgebildeten Flussleitern 56A und 56B in einer weiteren Ausgestaltung, ebenfalls ohne eine zugehörige Magnetsensoranordnung, wobei bei diesem Ausführungsbeispiel im Unterschied zu den zuvor beschriebenen Ausführungsbeispielen einer erfindungsgemäßen Flussleiteranordnung 56 der erste Flussleiter 56A und der zweite Flussleiter 56B jeweils keine ringscheibensegmentförmigen zweiten Sammelflächen 19 aufweisen, sondern jeweils rechteckige bzw. insbesondere quadratische Sammelflächen 19, was grundsätzlich auch möglich ist. Die Größe der zweiten Sammelflächen 19 ist jedoch auch bei diesem Ausführungsbeispiel dabei insbesondere jeweils derart groß gewählt, dass eine ausreichende Kompensation des in Abhängigkeit von einem Stör-Magnetfeld MS erzeugten magnetischen Flusses innerhalb der Flussleiteranordnung 56 bzw. insbesondere in den einzelnen Flussleitern 56A und 56B erreicht wird.

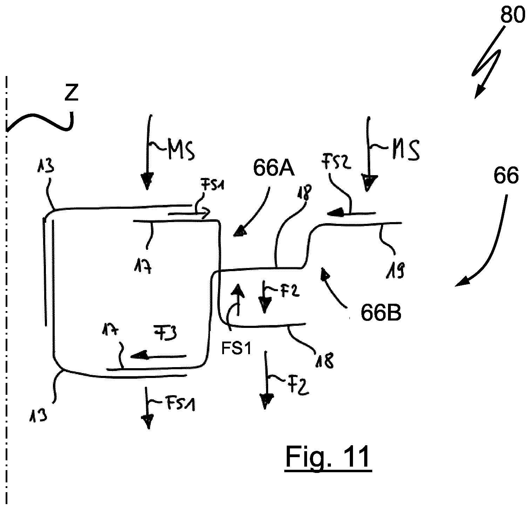

**Fig. 11** zeigt ein weiteres Ausführungsbeispiel eines Ausschnitts einer erfindungsgemäßen Drehmomentsensorvorrichtung 80 in Prinzipdarstellung mit einem weiteren Ausführungsbeispiel einer erfindungsgemäßen Flussleiteranordnung 66, diesmal jedoch nur mit jeweils einem erfindungsgemäß ausgebildeten zweiten Flussleiter 66B mit einer zweiten Sammelfläche 19, ebenfalls ohne eine zugehörige Magnetsensoranordnung. Der erste Flussleiter 66A weist nur eine erste Sammelfläche 17 auf, jedoch keine zweite Sammelfläche.

Durch die in Fig. 11 abgebildete Ausgestaltung des zweiten Flussleiters 66B mit einer sich in einer Ebene senkrecht auf der Zentrumsachse Z stehenden Ebene, die sich in axialer Richtung zwischen den Sammelflächen 17 und 19 des zweiten Flussleiters 66B erstreckt und der in Fig. 11 abgebildeten Anordnung der beiden Flussleiter 66A und 66B relativ zueinander mit der Übertragungsfläche 18 des ersten Flussleiters 66A unterhalb der Übertragungsfläche des zweiten Flussleiters 66B, lässt sich auch mit einer derartigen Flussleiteranordnung 66 erreichen, dass sich, wenn die Drehmomentsensorvorrichtung 80 von einem entsprechend orientierten Stör-Magnetfeld MS umgeben ist, ein in der ersten Sammelfläche 17 des ersten Flussleiters 66A zumindest teilweise gebündelter und über die wenigstens eine Übertragungsfläche 18 des ersten Flussleiters 66A übertragener erster Stör-Fluss-Anteil FS1 des ersten magnetischen Flusses F1, und ein in der zweiten Sammelfläche 19 des zweiten Flussleiters 66B zumindest teilweise gebündelter und über die wenigstens eine Übertragungsfläche 18 des zweiten Flussleiters 66B übertragener zweiter Stör-Fluss-Anteil FS2 des zweiten magnetischen Flusses F2 zumindest teilweise aufheben.

### Bezugszeichenliste:

- 1: Drehmomentsensorvorrichtung, aus dem Stand der Technik bekannt
- 2: Statoranordnung
- 2A: erster Stator
- 2B: zweiter Stator
- 3: ringscheibenförmiger Statorkörper
- 4: Statorlasche
- 5: Magnetelement
- 6: Flussleiteranordnung, aus dem Stand der Technik bekannt
- 6A: erster Flussleiter, aus dem Stand der Technik bekannt
- 6B: zweiter Flussleiter, aus dem Stand der Technik bekannt
- 7: Sammelfläche
- 8: Übertragungsfläche

- 10, 20, 30, 40, 50, 60, 70, 80: erfindungsgemäße Drehmomentsensorvorrichtung
- 12: Statoranordnung
- 12A: erster Stator
- 12B: zweiter Stator
- 13: ringscheibenförmigen Statorkörper
- 14: Statorlasche
- 15: Magnetelement
- 16, 26, 36, 46, 56, 66: erfindungsgemäße Flussleiteranordnung
- 16A, 26A, 36A, 46A, 56A, 66A: erfindungsgemäßer erster Flussleiter
- 16B, 26B, 36B, 46B, 56B, 66B: erfindungsgemäßer zweiter Flussleiter
- 17: erste Sammelfläche
- 18: Übertragungsfläche
- 19: zweite Sammelfläche
- 18A: Verbindungsabschnitt
- 19A: Verbindungsabschnitt
- 21: Magnetsensor
- 22: Leiterplatte
- 23: Aussparung, Nut
- 24: Bereich mit reduzierter Dicke
- 27: erster Teil des Flussleiters
- 28: zweiter Teil des Flussleiters

- F1: erster magnetischer Fluss
- F2: zweiter magnetischer Fluss
- F3: zurück in die Statoranordnung übertragener Anteil des ersten magnetischen Flusses
- F4: zurück in die Umgebung übertragener Anteil des zweiten magnetischen Flusses
- FN: magnetischer Nutz-Fluss
- FS1: erster magnetischer Stör-Fluss
- FS2: zweiter magnetischer Stör-Fluss
- MN: Nutz-Magnetfeld
- MS: Stör-Magnetfeld
- U: Umfangsrichtung
- Z: Zentrumsachse

## Patentansprüche

1. Drehmomentsensorvorrichtung (10, 20, ..., 80) zur Erfassung eines auf eine Welle aufgebrachten Drehmoments, insbesondere zur Erfassung eines auf eine Lenkwelle eines Kraftfahrzeugs aufgebrachten Drehmoments,
wobei die Drehmomentsensorvorrichtung (10, 20, ..., 80) eine Magnetanordnung (15), eine Statoranordnung (12) und eine Flussleiteranordnung (16, 26, 36, 46, 56, 66) aufweist,
wobei die Statoranordnung (12) einen ersten Stator (12A) und einen zweiten Stator (12B) aufweist, die jeweils konzentrisch zueinander entlang einer Zentrumsachse (Z) angeordnet sind, wobei der erste und zweite Stator (12A, 12B) einen ringscheibenförmigen Statorkörper (13) aufweisen,
wobei die Magnetanordnung (15) zum Erzeugen wenigstens eines Nutz-Magnetfeldes (MN) ausgebildet ist und die Magnetanordnung (15) und die Statoranordnung (12) durch Aufbringen eines Drehmoments derart in Umfangsrichtung (U) um eine Zentrumsachse (Z) der Drehmomentsensorvorrichtung (10, 20, ..., 80) relativ zueinander bewegbar sind, dass durch die Relativbewegung zwischen der Magnetanordnung (15) und der Statoranordnung (12) in Umfangsrichtung (U) in der Statoranordnung (12) in Abhängigkeit von dem auf die Drehmomentsensorvorrichtung (10, 20, ..., 80) aufgebrachten Drehmoment ein magnetischer Nutz-Fluss (FN) erzeugbar ist,
wobei in der Statoranordnung (12) ferner in Abhängigkeit von einem die Drehmomentsensorvorrichtung (10, 20, ..., 80) umgebenden Stör-Magnetfeld (MS) ein erster magnetischer Stör-Fluss (FS1) erzeugbar ist,
wobei die Flussleiteranordnung (16, 26, 36, 46, 56, 66) einen ersten Flussleiter (16A, 26A, 36A, 46A, 56A, 66A) und einen zweiten Flussleiter (16B, 26B, 36B, 46B, 56B, 66B) aufweist und der erste Flussleiter (16A, 26A, 36A, 46A, 56A, 66A) und der zweite Flussleiter (16B, 26B, 36B, 46B, 56B, 66B) jeweils eine erste Sammelfläche (17) sowie jeweils wenigstens eine Übertragungsfläche (18) aufweisen,
wobei die ersten Sammelflächen (17) in radialer Richtung zumindest teilweise überlappend mit dem jeweiligen ringscheibenförmigen Statorkörper (13) angeordnet sind und jeweils ausgebildet sind zur zumindest teilweisen Bündelung und/oder zur zumindest teilweisen Weiterleitung eines in der Statoranordnung (12) in Abhängigkeit von einem aufgebrachten Drehmoment erzeugten magnetischen Nutz-Flusses (FN) und/oder eines in Abhängigkeit von einem die Drehmomentsensorvorrichtung umgebenden Stör-Magnetfeld (MS) erzeugten ersten magnetischen Stör-Flusses (FS1),
wobei die wenigstens eine Übertragungsfläche (18) des ersten Flussleiters (16A, 26A, 36A, 46A, 56A, 66A) und die wenigstens eine Übertragungsfläche (18) des zweiten Flussleiters (16B, 26B, 36B, 46B, 56B, 66B) derart gegenüberliegend angeordnet sind, dass sie einen axialen Spalt zwischen sich bilden, in dem wenigstens ein Magnetsensor (21) einer Magnetsensoranordnung anordbar ist,
wobei über die wenigstens eine Übertragungsfläche (18) des ersten Flussleiters (16A, 26A, 36A, 46A, 56A, 66A) ein im ersten Flussleiter (16A, 26A, 36A, 46A, 56A, 66A) gebündelter erster magnetischer Fluss (F1) an einen in dem axialen Spalt angeordneten Magnetsensor (21) einer Magnetsensoranordnung übertragbar ist, und
wobei über die wenigstens eine Übertragungsfläche (18) des zweiten Flussleiters (16B, 26B, 36B, 46B, 56B, 66B) ein im zweiten Flussleiter (16B, 26B, 36B, 46B, 56B, 66B) gebündelter, zweiter magnetischer Fluss (F2) an den Magnetsensor (21) übertragbar ist,
**dadurch gekennzeichnet, dass** der zweite Flussleiter (16B, 26B, 36B, 46B, 56B, 66B) ferner eine mit der wenigstens einen Übertragungsfläche (18) des zweiten Flussleiters (16B, 26B, 36B, 46B, 56B, 66B) magnetisch leitend gekoppelte, zweite Sammelfläche (19) aufweist, die zur Erzeugung bzw. zur zumindest teilweisen Bündelung und/oder Weiterleitung eines zweiten magnetischen Stör-Flusses (FS2) in Abhängigkeit von einem die Drehmomentsensorvorrichtung (10, 20, ..., 80) umgebenden Stör-Magnetfeld (MS) ausgebildet ist,
wobei die erste Sammelfläche (17) und die zweite Sammelfläche (19) und wenigstens eine Übertragungsfläche (18) wenigstens eines Flussleiters (16A, 26A, 36A, 46A, 56A, 66A; 16B, 26B, 36B, 46B, 56B, 66B) sich zumindest teilweise in einer Ebene erstreckt, die senkrecht zur Zentrumsachse (Z) der Drehmomentsensorvorrichtung (10, 20, ..., 80) verläuft,
wobei sich die zweite Sammelfläche (19) wenigstens eines Flussleiters (16A, 26A, 36A, 46A, 56A, 66A; 16B, 26B, 36B, 46B, 56B, 66B) zumindest teilweise parallel zur ersten Sammelfläche (17) des zugehörigen Flussleiters (16A, 26A, 36A, 46A, 56A, 66A; 16B, 26B, 36B, 46B, 56B, 66B) erstreckt,
wobei sich die zweite Sammelfläche (19) wenigstens eines Flussleiters (16A, 26A, 36A, 46A, 56A, 66A; 16B, 26B, 36B, 46B, 56B, 66B) in radialer Richtung weiter nach außen erstreckt als die erste Sammelfläche (17) des zugehörigen Flussleiters und in radialer Richtung weiter außen angeordnet ist als die erste Sammelfläche (17) des zugehörigen Flussleiters (16A, 26A, 36A, 46A, 56A, 66A; 16B, 26B, 36B, 46B, 56B, 66B),
wobei der erste Flussleiter (16A, 26A, 36A, 46A, 56A, 66A) und der zweite Flussleiter (16B, 26B, 36B, 46B, 56B, 66B) jeweils derart ausgebildet und derart relativ zueinander angeordnet sind, dass sich, wenn die Drehmomentsensorvorrichtung (10, 20, ..., 80) von einem Stör-Magnetfeld (MS) umgeben ist, ein in der ersten Sammelfläche (17) des ersten Flussleiters (16A, 26A, 36A, 46A, 56A, 66A) zumindest teilweise gebündelter und über die wenigstens eine Übertragungsfläche (18) des ersten Flussleiters (16A, 26A, 36A, 46A, 56A, 66A) an den Magnetsensor übertragener erster Stör-Fluss-Anteil (FS1) des ersten magnetischen Flusses (F1), und ein in der zweiten Sammelfläche (19) des zweiten Flussleiters (16B, 26B, 36B, 46B, 56B, 66B) zumindest teilweise gebündelter und über die wenigstens eine Übertragungsfläche (18) des zweiten Flussleiters (16B, 26B, 36B, 46B, 56B, 66B) an den Magnetsensor (21) übertragener zweiter Stör-Fluss-Anteil (FS2) des zweiten magnetischen Flusses (F2) zumindest teilweise aufheben,
wobei wenigstens ein Magnetsensor (21) der Magnetsensoranordnung ein SMD-Magnetsensor ist, wobei der Magnetsensor (21) auf einer Leiterplatte (22) angeordnet ist, die mit ihrer Leiterplattenebene normal zur Zentrumsachse (Z) der Drehmomentsensorvorrichtung (10, 20, ..., 80) orientiert angeordnet ist,
wobei die Leiterplatte (22) im Bereich wenigstens eines Magnetsensors (21) bzw. einer oder mehrere Übertragungsflächen (18) eine geringere Dicke aufweisen als im restlichen Bereich.

2. Drehmomentsensorvorrichtung (10, 20, ..., 80) nach Anspruch 1, **dadurch gekennzeichnet, dass** die Leiterplatte (22) im Bereich der Dickenreduzierung an einer Unterseite der Leiterplatte (22) eine oder mehrere eingebrachte Nuten (23) oder Aussparungen (23) aufweist, in welche insbesondere die der Unterseite der Leiterplatte (22) zugewandten Übertragungsflächen (18) eingreifen bzw. hineinragen können.

3. Drehmomentsensorvorrichtung (10, 20, ..., 80) nach einem der vorgenannten Ansprüche, **dadurch gekennzeichnet, dass** der erste Flussleiter (16A, 26A, 36A, 46A, 56A, 66A) ferner ebenfalls eine zweite Sammelfläche (19) aufweist, wobei die zweite Sammelfläche (19) des ersten Flussleiters (16A, 26A, 36A, 46A, 56A, 66A) mit der wenigstens einen Übertragungsfläche (18) des ersten Flussleiters (16A, 26A, 36A, 46A, 56A, 66A) magnetisch leitend gekoppelt ist und ebenfalls zur Erzeugung bzw. zur zumindest teilweisen Bündelung und Weiterleitung eines zweiten magnetischen Stör-Flusses (FS2) in Abhängigkeit von einem die Drehmomentsensorvorrichtung (10, 20, ..., 80) umgebenden Stör-Magnetfeld (MS) ausgebildet ist,
wobei der erste Flussleiter (16A, 26A, 36A, 46A, 56A, 66A) und der zweite Flussleiter (16B, 26B, 36B, 46B, 56B, 66B) jeweils derart ausgebildet und derart relativ zueinander angeordnet sind, dass sich, wenn die Drehmomentsensorvorrichtung (10, 20, ..., 80) von einem Stör-Magnetfeld (MS) umgeben ist, ein in der ersten Sammelfläche (17) des zweiten Flussleiters (16B, 26B, 36B, 46B, 56B, 66B) zumindest teilweise gebündelter und über die wenigstens eine Übertragungsfläche (18) des zweiten Flussleiters (16B, 26B, 36B, 46B, 56B, 66B) an den Magnetsensor übertragener erster Stör-Fluss-Anteil (FS1) des zweiten magnetischen Flusses (F2), und ein in der zweiten Sammelfläche (19) des ersten Flussleiters (16A, 26A, 36A, 46A, 56A, 66A) zumindest teilweise gebündelter und über die wenigstens eine Übertragungsfläche (18) des ersten Flussleiters (16A, 26A, 36A, 46A, 56A, 66A) an den Magnetsensor (21) übertragener zweiter Stör-Fluss-Anteil (FS2) des ersten magnetischen Flusses (F1) zumindest teilweise aufheben.

4. Drehmomentsensorvorrichtung (10, 20, ..., 80) nach einem der vorgenannten Ansprüche, **dadurch gekennzeichnet, dass** sich wenigstens eine Übertragungsfläche (18) wenigstens eines Flussleiters (16A, 26A, 36A, 46A, 56A, 66A; 16B, 26B, 36B, 46B, 56B, 66B) zumindest teilweise in einer Ebene erstreckt, die, bezogen auf eine Richtung entlang der Zentrumsachse (Z), zwischen der ersten Sammelfläche (17) und der zweiten Sammelfläche (19) des zugehörigen Flussleiters (16A, 26A, 36A, 46A, 56A, 66A; 16B, 26B, 36B, 46B, 56B, 66B) verläuft.

5. Drehmomentsensorvorrichtung (10, 20, ..., 80) nach einem der vorgenannten Ansprüche, **dadurch gekennzeichnet, dass** die erste Sammelfläche (17) wenigstens eines Flussleiters (16A, 26A, 36A, 46A, 56A, 66A; 16B, 26B, 36B, 46B, 56B, 66B) in radialer Richtung zumindest teilweise innerhalb der Statoranordnung (12) angeordnet ist, insbesondere zumindest teilweise mit dieser in radialer Richtung überlappend.

6. Drehmomentsensorvorrichtung (10, 20, ..., 80) nach einem der vorgenannten Ansprüche, **dadurch gekennzeichnet, dass** die zweite Sammelfläche (17) wenigstens eines Flussleiters (16A, 26A, 36A, 46A, 56A, 66A; 16B, 26B, 36B, 46B, 56B, 66B) in axialer Richtung auf einer Höhe entlang der Zentrumsachse innerhalb der Statoranordnung (12) angeordnet ist, insbesondere zumindest teilweise seitlich neben der Statoranordnung (12).

7. Drehmomentsensorvorrichtung (10, 20, ..., 80) nach einem der vorgenannten Ansprüche, **dadurch gekennzeichnet, dass** die zweite Sammelfläche (17) wenigstens eines Flussleiters (16A, 26A, 36A, 46A, 56A, 66A; 16B, 26B, 36B, 46B, 56B, 66B) in axialer Richtung entlang der Zentrumsachse (Z) oberhalb oder unterhalb der Statoranordnung (12) angeordnet ist

8. Drehmomentsensorvorrichtung (10, 20, ..., 80) nach einem der vorgenannten Ansprüche, **dadurch gekennzeichnet, dass** eine Größe der zweiten Sammelfläche (19) wenigstens eines Flussleiters (16A, 26A, 36A, 46A, 56A, 66A; 16B, 26B, 36B, 46B, 56B, 66B) derart gewählt ist, dass ein durch ein definiertes, die Drehmomentsensorvorrichtung (10, 20, ..., 80) umgebendes Stör-Magnetfeld (MS) mit definierter Feldrichtung erzeugter und von der zweiten Sammelfläche (19) gebündelter zweiter magnetischer Stör-Fluss (FS2) so groß ist, dass ein definierter Anteil des ersten Stör-Flusses (FS1) kompensiert wird, insbesondere ein Anteil von wenigstens 25%, 50% oder 75% des durch das Stör-Magnetfeld (MS) erzeugten des ersten Stör-Flusses (FS1).

9. Drehmomentsensorvorrichtung (10, 20, ..., 80) nach einem der vorgenannten Ansprüche, **dadurch gekennzeichnet, dass** die zweite Sammelfläche (19) wenigstens eines Flussleiters (16A, 26A, 36A, 46A, 56A, 66A; 16B, 26B, 36B, 46B, 56B, 66B) wenigstens so groß ist wie die erste Sammelfläche (17) des zugehörigen Flussleiters (16A, 26A, 36A, 46A, 56A, 66A; 16B, 26B, 36B, 46B, 56B, 66B), vorzugsweise in etwa oder genauso groß, oder wenigstens das 1,3-fache, 1,5-fache, 2-fache, 2.5-fache oder 3-fache von der ersten Sammelfläche (17) beträgt, höchstens insbesondere jedoch das 4-fache.

10. Drehmomentsensorvorrichtung (10, 20, ..., 80) nach einem der vorgenannten Ansprüche, **dadurch gekennzeichnet, dass** die erste Sammelfläche (17) und die zweite Sammelfläche (19) wenigstens eines Flussleiters (16A, 26A, 36A, 46A, 56A, 66A; 16B, 26B, 36B, 46B, 56B, 66B) jeweils durch einen Verbindungsabschnitt (18A, 19A) miteinander verbunden sind, insbesondere durch einen sich zumindest teilweise parallel zur Zentrumsachse (Z) erstreckenden Verbindungsabschnitt (18A, 19A).

## Claims

1. Torque sensor device (10, 20, ..., 80) for detecting a torque applied to a shaft, in particular for detecting a torque applied to a steering shaft of a motor vehicle, wherein the torque sensor device (10, 20, ..., 80) has a magnetic arrangement (15), a stator arrangement (12) and a flux guide arrangement (16, 26, 36, 46, 56, 66),
wherein the stator arrangement (12) has a first stator (12A) and a second stator (12B) which are each arranged concentrically with respect to one another along a central axis (Z), wherein the first and the second stator (12A, 12B) have an annular-disc-shaped stator body (13), wherein the magnetic arrangement (15) is configured to generate at least one magnetic working field (MN), and the magnetic arrangement (15) and the stator arrangement (12) are movable relative to one another in a circumferential direction (U) about a central axis (Z) of the torque sensor device (10, 20, ..., 80) as a result of a torque being applied, in such a way that the relative movement between the magnetic arrangement (15) and the stator arrangement (12) in a circumferential direction (U) enables a magnetic working flux (FN) to be generated in the stator arrangement (12) in a manner dependent on the torque applied to the torque sensor device (10, 20, ..., 80),
wherein, furthermore, a first magnetic interference flux (FS1) can be generated in the stator arrangement (12) in a manner dependent on a magnetic interference field (MS) surrounding the torque sensor device (10, 20, ..., 80), wherein the flux guide arrangement (16, 26, 36, 46, 56, 66) has a first flux guide (16A, 26A, 36A, 46A, 56A, 66A) and a second flux guide (16B, 26B, 36B, 46B, 56B, 66B), and the first flux guide (16A, 26A, 36A, 46A, 56A, 66A) and the second flux guide (16B, 26B, 36B, 46B, 56B, 66B) each have a first collection surface (17) and each have at least one transmission surface (18),
wherein the first collection surfaces (17) are arranged so as to at least partially overlap the respective annular-disc-shaped stator body (13) in a radial direction and are each configured to at least partially concentrate and/or to at least partially conduct a magnetic working flux (FN), which is generated in the stator arrangement (12) in a manner dependent on an applied torque, and/or a first magnetic interference flux (FS1), which is generated in a manner dependent on a magnetic interference field (FS) surrounding the torque sensor device,
wherein the at least one transmission surface (18) of the first flux guide (16A, 26A, 36A, 46A, 56A, 66A) and the at least one transmission surface (18) of the second flux guide (16B, 26B, 36B, 46B, 56B, 66B) are arranged opposite one another so as to between them form an axial gap in which at least one magnetic sensor (21) of a magnetic sensor arrangement can be arranged,
wherein a first magnetic flux (F1) that is concentrated in the first flux guide (16A, 26A, 36A, 46A, 56A, 66A) can be transmitted via the at least one transmission surface (18) of the first flux guide (16A, 26A, 36A, 46A, 56A, 66A) to a magnetic sensor (21), arranged in the axial gap, of a magnetic sensor arrangement, and
wherein a second magnetic flux (F2) that is concentrated in the second flux guide (16B, 26B, 36B, 46B, 56B, 66B) can be transmitted via the at least one transmission surface (18) of the second flux guide (16B, 26B, 36B, 46B, 56B, 66B) to the magnetic sensor (21),
**characterized in that** the second flux guide (16B, 26B, 36B, 46B, 56B, 66B) furthermore has a second collection surface (19) which is magnetically conductively coupled to the at least one transmission surface (18) of the second flux guide (16B, 26B, 36B, 46B, 56B, 66B) and which is configured to generate and/or to at least partially concentrate and/or conduct a second magnetic interference flux (FS2) in a manner dependent on a magnetic interference field (MS) surrounding the torque sensor device (10, 20, ..., 80),
wherein the first collection surface (17) and the second collection surface (19) and at least one transmission surface (18) of at least one flux guide (16A, 26A, 36A, 46A, 56A, 66A; 16B, 26B, 36B, 46B, 56B, 66B) extends at least partially in a plane that runs perpendicular to the central axis (Z) of the torque sensor device (10, 20, ..., 80),
wherein the second collection surface (19) of at least one flux guide (16A, 26A, 36A, 46A, 56A, 66A; 16B, 26B, 36B, 46B, 56B, 66B) extends at least partially parallel to the first collection surface (17) of the associated flux guide (16A, 26A, 36A, 46A, 56A, 66A; 16B, 26B, 36B, 46B, 56B, 66B),
wherein the second collection surface (19) of at least one flux guide (16A, 26A, 36A, 46A, 56A, 66A; 16B, 26B, 36B, 46B, 56B, 66B) extends further outward in a radial direction than the first collection surface (17) of the associated flux guide and is arranged further to the outside in a radial direction than the first collection surface (17) of the associated flux guide (16A, 26A, 36A, 46A, 56A, 66A; 16B, 26B, 36B, 46B, 56B, 66B),
wherein the first flux guide (16A, 26A, 36A, 46A, 56A, 66A) and the second flux guide (16B, 26B, 36B, 46B, 56B, 66B) are each configured and arranged relative to one another such that, if the torque sensor device (10, 20, ..., 80) is surrounded by a magnetic interference field (MS), a first interference flux component (FS1) of the first magnetic flux (F1), which component is at least partially concentrated in the first collection surface (17) of the first flux guide (16A, 26A, 36A, 46A, 56A, 66A) and transmitted via the at least one transmission surface (18) of the first flux guide (16A, 26A, 36A, 46A, 56A, 66A) to the magnetic sensor, and a second interference flux component (FS2) of the second magnetic flux (F2), which component is at least partially concentrated in the second collection surface (19) of the second flux guide (16B, 26B, 36B, 46B, 56B, 66B) and transmitted via the at least one transmission surface (18) of the second flux guide (16B, 26B, 36B, 46B, 56B, 66B) to the magnetic sensor (21), at least partially cancel one another out,
wherein at least one magnetic sensor (21) of the magnetic sensor arrangement is an SMD magnetic sensor, wherein the magnetic sensor (21) is arranged on a printed circuit board (22), which is arranged with its printed circuit board plane oriented normal to the central axis (Z) of the torque sensor device (10, 20, ..., 80),
wherein the printed circuit board (22) has a smaller thickness in the region of at least one magnetic sensor (21) or one or more transmission surfaces (18) than in the remaining region.

2. Torque sensor device (10, 20, ..., 80) according to Claim 1, **characterized in that** the printed circuit board (22) has one or more introduced grooves (23) or recesses (23), into which in particular the transmission surfaces (18) facing the bottom side of the printed circuit board (22) can engage or protrude, in the region of reduced thickness on a bottom side of the printed circuit board (22).

3. Torque sensor device (10, 20, ..., 80) according to any one of the preceding claims, **characterized in that** the first flux guide (16A, 26A, 36A, 46A, 56A, 66A) furthermore likewise has a second collection surface (19), wherein the second collection surface (19) of the first flux guide (16A, 26A, 36A, 46A, 56A, 66A) is magnetically conductively coupled to the at least one transmission surface (18) of the first flux guide (16A, 26A, 36A, 46A, 56A, 66A) and is likewise configured to generate and/or to at least partially concentrate and conduct a second magnetic interference flux (FS2) in a manner dependent on a magnetic interference field (MS) surrounding the torque sensor device (10, 20, ..., 80), wherein the first flux guide (16A, 26A, 36A, 46A, 56A, 66A) and the second flux guide (16B, 26B, 36B, 46B, 56B, 66B) are each configured and arranged relative to one another such that, if the torque sensor device (10, 20, ..., 80) is surrounded by a magnetic interference field (MS), a first interference flux component (FS1) of the second magnetic flux (F2), which component is at least partially concentrated in the first collection surface (17) of the second flux guide (16B, 26B, 36B, 46B, 56B, 66B) and transmitted via the at least one transmission surface (18) of the second flux guide (16B, 26B, 36B, 46B, 56B, 66B) to the magnetic sensor, and a second interference flux component (FS2) of the first magnetic flux (F1), which component is at least partially concentrated in the second collection surface (19) of the first flux guide (16A, 26A, 36A, 46A, 56A, 66A) and transmitted via the at least one transmission surface (18) of the first flux guide (16A, 26A, 36A, 46A, 56A, 66A) to the magnetic sensor (21), at least partially cancel one another out.

4. Torque sensor device (10, 20, ..., 80) according to any one of the preceding claims, **characterized in that** at least one transmission surface (18) of at least one flux guide (16A, 26A, 36A, 46A, 56A, 66A; 16B, 26B, 36B, 46B, 56B, 66B) extends at least partially in a plane which, in relation to a direction along the central axis (Z), runs between the first collection surface (17) and the second collection surface (19) of the associated flux guide (16A, 26A, 36A, 46A, 56A, 66A; 16B, 26B, 36B, 46B, 56B, 66B).

5. Torque sensor device (10, 20, ..., 80) according to any one of the preceding claims, **characterized in that** the first collection surface (17) of at least one flux guide (16A, 26A, 36A, 46A, 56A, 66A; 16B, 26B, 36B, 46B, 56B, 66B) is arranged at least partially within the stator arrangement (12) in a radial direction, in particular at least partially overlaps the stator arrangement in a radial direction.

6. Torque sensor device (10, 20, ..., 80) according to any one of the preceding claims, **characterized in that** the second collection surface (17) of at least one flux guide (16A, 26A, 36A, 46A, 56A, 66A; 16B, 26B, 36B, 46B, 56B, 66B) is arranged within the stator arrangement (12), in particular at least partially laterally adjacent to the stator arrangement (12), at a level along the central axis in an axial direction.

7. Torque sensor device (10, 20, ..., 80) according to any one of the preceding claims, **characterized in that** the second collection surface (17) of at least one flux guide (16A, 26A, 36A, 46A, 56A, 66A; 16B, 26B, 36B, 46B, 56B, 66B) is arranged above or below the stator arrangement (12) in an axial direction along the central axis (Z).

8. Torque sensor device (10, 20, ..., 80) according to any one of the preceding claims, **characterized in that** a size of the second collection surface (19) of at least one flux guide (16A, 26A, 36A, 46A, 56A, 66A; 16B, 26B, 36B, 46B, 56B, 66B) is selected such that a second magnetic interference flux (FS2) which is generated by a defined magnetic interference field (MS) surrounding the torque sensor device (10, 20, ..., 80) and with a defined field direction and which is focused by the second collection surface (19) is of such a magnitude that a defined component of the first interference flux (FS1), in particular a component of at least 25%, 50% or 75% of the first interference flux (FS1) generated by the magnetic interference field (MS), is compensated.

9. Torque sensor device (10, 20, ..., 80) according to any one of the preceding claims, **characterized in that** the second collection surface (19) of at least one flux guide (16A, 26A, 36A, 46A, 56A, 66A; 16B, 26B, 36B, 46B, 56B, 66B) is at least as large as the first collection surface (17) of the associated flux guide (16A, 26A, 36A, 46A, 56A, 66A; 16B, 26B, 36B, 46B, 56B, 66B), preferably approximately or exactly the same size as, or at least 1.3 times, 1.5 times, 2 times, 2.5 times or 3 times, but in particular at most 4 times, the size of the first collection surface (17).

10. Torque sensor device (10, 20, ..., 80) according to any one of the preceding claims, **characterized in that** the first collection surface (17) and the second collection surface (19) of at least one flux guide (16A, 26A, 36A, 46A, 56A, 66A; 16B, 26B, 36B, 46B, 56B, 66B) are connected to one another in each case by a connecting portion (18A, 19A), in particular by a connecting portion (18A, 19A) extending at least partially parallel to the central axis (Z).

## Revendications

1. Dispositif de détection de couple (10, 20, ..., 80) destiné à acquérir un couple appliqué à un arbre, notamment destiné à acquérir un couple appliqué à un arbre de direction d'un véhicule automobile,
le dispositif de détection de couple (10, 20, ..., 80) possédant un arrangement d'aimants (15), un arrangement de stators (12) et un arrangement de conducteurs de flux (16, 26, 36, 46, 56, 66),
l'arrangement de stators (12) possédant un premier stator (12A) et un deuxième stator (12B), lesquels sont respectivement disposés de manière concentrique l'un par rapport à l'autre le long d'un axe central (Z), les premier et deuxième stators (12A, 12B) comprenant un corps de stator (13) en forme de disque annulaire,
l'arrangement d'aimants (15) étant configuré pour générer au moins un champ magnétique utile (MN) et l'arrangement d'aimants (15) ainsi que l'arrangement de stators (12) pouvant être déplacés l'un par rapport à l'autre par l'application d'un couple dans la direction périphérique (U) autour de l'axe central (Z) du dispositif de détection de couple (10, 20, ... 80) de telle sorte qu'un flux magnétique utile (FN) peut être généré dans l'arrangement de stators (12), par le mouvement relatif entre l'arrangement d'aimants (15) et l'arrangement de stators (12) dans la direction périphérique (U), en fonction du couple appliqué sur le dispositif de détection de couple (10, 20, ..., 80),
un premier flux magnétique parasite (FS1) pouvant en outre être généré dans l'arrangement de stators (12) en fonction d'un champ magnétique parasite (MS) qui entoure le dispositif de détection de couple (10, 20, ..., 80), l'arrangement de conducteurs de flux (16, 26, 36, 46, 56, 66) possédant un premier conducteur de flux (16A, 26A, 36A, 46A, 56A, 66A) et un deuxième conducteur de flux (16B, 26B, 36B, 46B, 56B, 66B), et le premier conducteur de flux (16A, 26A, 36A, 46A, 56A, 66A) ainsi que le deuxième conducteur de flux (16B, 26B, 36B, 46B, 56B, 66B) possédant respectivement une première surface collectrice (17) ainsi que respectivement au moins une surface de transmission (18),
les premières surfaces collectrices (17) étant disposées dans la direction radiale de manière à se chevaucher au moins partiellement avec le corps de stator (13) en forme de disque annulaire respectif et étant respectivement configurées pour une concentration au moins partielle et/ou pour une transmission au moins partielle d'un flux magnétique utile (FN) généré dans l'arrangement de stators (12) en fonction d'un couple appliqué et/ou d'un premier flux magnétique parasite (FS1) généré en fonction d'un champ magnétique parasite (MS) qui entoure le dispositif de détection de couple,
l'au moins une surface de transmission (18) du premier conducteur de flux (16A, 26A, 36A, 46A, 56A, 66A) et l'au moins une surface de transmission (18) du deuxième conducteur de flux (16B, 26B, 36B, 46B, 56B, 66B) étant disposées l'une en face de l'autre de telle sorte qu'elles forment entre elles un espace axial, dans lequel peut être disposé au moins un capteur magnétique (21) d'un arrangement de capteurs magnétiques,
un premier flux magnétique (F1) concentré dans le premier conducteur de flux (16A, 26A, 36A, 46A, 56A, 66A) pouvant être transmis à un capteur magnétique (21) d'un arrangement de capteurs magnétiques disposé dans l'espace axial par le biais de l'au moins une surface de transmission (18) du premier conducteur de flux (16A, 26A, 36A, 46A, 56A, 66A), et
un deuxième flux magnétique (F2) concentré dans le deuxième conducteur de flux (16B, 26B, 36B, 46B, 56B, 66B) pouvant être transmis au capteur magnétique (21) par le biais de l'au moins une surface de transmission (18) du deuxième conducteur de flux (16B, 26B, 36B, 46B, 56B, 66B),
**caractérisé en ce que** le deuxième conducteur de flux (16B, 26B, 36B, 46B, 56B, 66B) possède en outre une deuxième surface collectrice (19) couplée avec conductivité magnétique à l'au moins une surface de transmission (18) du deuxième conducteur de flux (16B, 26B, 36B, 46B, 56B, 66B), laquelle est configurée pour la génération ou pour la concentration au moins partielle et/ou la retransmission d'un deuxième flux magnétique parasite (FS2) en fonction d'un champ magnétique parasite (MS) qui entoure le dispositif de détection de couple (10, 20, ..., 80),
la première surface collectrice (17) et la deuxième surface collectrice (19) ainsi qu'au moins une surface de transmission (18) d'au moins un conducteur de flux (16A, 26A, 36A, 46A, 56A, 66A ; 16B, 26B, 36B, 46B, 56B, 66B) s'étendant au moins partiellement dans un plan qui suit un tracé perpendiculaire à l'axe central (Z) du dispositif de détection de couple (10, 20, ..., 80),
la deuxième surface collectrice (19) d'au moins un conducteur de flux (16A, 26A, 36A, 46A, 56A, 66A ; 16B, 26B, 36B, 46B, 56B, 66B) s'étendant au moins partiellement parallèlement à la première surface collectrice (17) du conducteur de flux (16A, 26A, 36A, 46A, 56A, 66A ; 16B, 26B, 36B, 46B, 56B, 66B) associé,
la deuxième surface collectrice (19) d'au moins un conducteur de flux (16A, 26A, 36A, 46A, 56A, 66A ; 16B, 26B, 36B, 46B, 56B, 66B) s'étendant dans la direction radiale plus loin vers l'extérieur que la première surface collectrice (17) du conducteur de flux associé et étant disposée dans la direction radiale plus loin vers l'extérieur que la première surface collectrice (17) du conducteur de flux (16A, 26A, 36A, 46A, 56A, 66A ; 16B, 26B, 36B, 46B, 56B, 66B) associé,
le premier conducteur de flux (16A, 26A, 36A, 46A, 56A, 66A) et le deuxième conducteur de flux (16B, 26B, 36B, 46B, 56B, 66B) étant respectivement configurés et disposés l'un par rapport à l'autre de telle sorte que, lorsque le dispositif de détection de couple (10, 20, ... 80) est entouré par un champ magnétique parasite (MS), une première composante de flux parasite (FS1) du premier flux magnétique (F1), concentrée au moins partiellement dans la première surface collectrice (17) du premier conducteur de flux (16A, 26A, 36A, 46A, 56A, 66A) et transmise au capteur magnétique par le biais de l'au moins une surface de transmission (18) du premier conducteur de flux (16A, 26A, 36A, 46A, 56A, 66A), et une deuxième composante de flux parasite (FS2) du deuxième flux magnétique (F2), concentrée au moins partiellement dans la deuxième surface collectrice (19) du deuxième conducteur de flux (16B, 26B, 36B, 46B, 56B, 66B) et transmise au capteur magnétique (21) par le biais de l'au moins une surface de transmission (18) du deuxième conducteur de flux (16B, 26B, 36B, 46B, 56B, 66B), s'annulent au moins partiellement,
au moins un capteur magnétique (21) de l'agencement de capteurs magnétiques étant un capteur magnétique CMS, le capteur magnétique (21) étant disposé sur une carte à circuit imprimé (22) qui est disposée avec son plan de carte à circuit imprimé orienté normalement à l'axe central (Z) du dispositif de détection de couple (10, 20, ..., 80),
la carte à circuit imprimé (22) présentant une épaisseur plus faible dans la zone d'au moins un capteur magnétique (21) ou d'une ou plusieurs surfaces de transmission (18) que dans la zone restante.

2. Dispositif capteur de couple (10, 20, ..., 80) selon la revendication 1, **caractérisé en ce que** la carte à circuit imprimé (22) possède une ou plusieurs rainures (23) ou évidements (23) pratiqués dans la zone de la réduction d'épaisseur, sur un côté inférieur de la carte de circuit imprimé (22), dans lesquels peuvent notamment venir en prise ou pénétrer les surfaces de transmission (18) faisant face au côté inférieur de la carte à circuit imprimé (22).

3. Dispositif de détection de couple (10, 20, ... 80) selon l'une des revendications précédentes, **caractérisé en ce que** le premier conducteur de flux (16A, 26A, 36A, 46A, 56A, 66A) possède en outre également une deuxième surface collectrice (19), la deuxième surface collectrice (19) du premier conducteur de flux (16A, 26A, 36A, 46A, 56A, 66A) étant couplée avec conductivité magnétique à l'au moins une surface de transmission (18) du premier conducteur de flux (16A, 26A, 36A, 46A, 56A, 66A) et étant également configurée pour la génération ou pour la concentration au moins partielle et la retransmission d'un deuxième flux magnétique parasite (FS2) en fonction d'un champ magnétique parasite (MS) qui entoure le dispositif de détection de couple (10, 20, ..., 80),
le premier conducteur de flux (16A, 26A, 36A, 46A, 56A, 66A) et le deuxième conducteur de flux (16B, 26B, 36B, 46B, 56B, 66B) étant respectivement configurés et disposés l'un par rapport à l'autre de telle sorte que, lorsque le dispositif de détection de couple (10, 20, ... 80) est entouré par un champ magnétique parasite (MS), une première composante de flux parasite (FS1) du deuxième flux magnétique (F2), concentrée au moins partiellement dans la première surface collectrice (17) du deuxième conducteur de flux (16B, 26B, 36B, 46B, 56B, 66B) et transmise au capteur magnétique par le biais de l'au moins une surface de transmission (18) du deuxième conducteur de flux (16B, 26B, 36B, 46B, 56B, 66B), et une deuxième composante de flux parasite (FS2) du premier flux magnétique (F1), concentrée au moins partiellement dans la deuxième surface collectrice (19) du premier conducteur de flux (16A, 26A, 36A, 46A, 56A, 66A) et transmise au capteur magnétique (21) par le biais de l'au moins une surface de transmission (18) du premier conducteur de flux (16A, 26A, 36A, 46A, 56A, 66A), s'annulent au moins partiellement.

4. Dispositif de détection de couple (10, 20, ... , 80) selon l'une des revendications précédentes, **caractérisé en ce qu'**au moins une surface de transmission (18) d'au moins un conducteur de flux (16A, 26A, 36A, 46A, 56A, 66A ; 16B, 26B, 36B, 46B, 56B, 66B) s'étend au moins partiellement dans un plan qui, par rapport à une direction le long de l'axe central (Z), suit un tracé entre la première surface collectrice (17) et la deuxième surface collectrice (19) du conducteur de flux (16A, 26A, 36A, 46A, 56A, 66A ; 16B, 26B, 36B, 46B, 56B, 66B) associé.

5. Dispositif de détection de couple (10, 20, ..., 80) selon l'une des revendications précédentes, **caractérisé en ce que** la première surface collectrice (17) d'au moins un conducteur de flux (16A, 26A, 36A, 46A, 56A, 66A ; 16B, 26B, 36B, 46B, 56B, 66B) est disposée au moins partiellement à l'intérieur de l'arrangement de stators (12) dans la direction radiale, notamment en chevauchant au moins partiellement celui-ci dans la direction radiale.

6. Dispositif de détection de couple (10, 20, ..., 80) selon l'une des revendications précédentes, **caractérisé en ce que** la deuxième surface collectrice (17) d'au moins un conducteur de flux (16A, 26A, 36A, 46A, 56A, 66A ; 16B, 26B, 36B, 46B, 56B, 66B) est disposée à une hauteur le long de l'axe central à l'intérieur de l'arrangement de stators (12) dans la direction axiale, notamment au moins partiellement latéralement à côté de l'arrangement de stators (12).

7. Dispositif de détection de couple (10, 20, ..., 80) selon l'une des revendications précédentes, **caractérisé en ce que** la deuxième surface collectrice (17) d'au moins un conducteur de flux (16A, 26A, 36A, 46A, 56A, 66A ; 16B, 26B, 36B, 46B, 56B, 66B) est disposée, dans la direction axiale le long de l'axe central (Z), au-dessous ou en dessous de l'arrangement de stators (12).

8. Dispositif de détection de couple (10, 20, ..., 80) selon l'une des revendications précédentes, **caractérisé en ce qu'**une taille de la deuxième surface collectrice (19) d'au moins un conducteur de flux (16A, 26A, 36A, 46A, 56A, 66A ; 16B, 26B, 36B, 46B, 56B, 66B) est choisie de telle sorte qu'un deuxième flux parasite magnétique (FS2), généré avec une direction de champ définie par un flux magnétique parasite (MS) défini qui entoure le dispositif de détection de couple (10, 20, ..., 80) et concentré par la deuxième surface collectrice (19) est suffisamment grand pour qu'une part définie du premier flux parasite (FS1) soit compensée, notamment une part d'au moins 25 %, 50 % ou 75 % du premier flux parasite (FS1) généré par le champ magnétique parasite (MS).

9. Dispositif de détection de couple (10, 20, ..., 80) selon l'une des revendications précédentes, **caractérisé en ce que** la deuxième surface collectrice (19) d'au moins un conducteur de flux (16A, 26A, 36A, 46A, 56A, 66A ; 16B, 26B, 36B, 46B, 56B, 66B) est au moins aussi grande que la première surface collectrice (17) du conducteur de flux (16A, 26A, 36A, 46A, 56A, 66A ; 16B, 26B, 36B, 46B, 56B, 66B) associé, de préférence approximativement ou exactement aussi grande, ou est égale à au moins 1,3 fois, 1,5 fois, 2 fois, 2,5 fois ou 3 fois la première surface collectrice (17), au maximum toutefois à 4 fois.

10. Dispositif de détection de couple (10, 20, ..., 80) selon l'une des revendications précédentes, **caractérisé en ce que** la première surface collectrice (17) et la deuxième surface collectrice (19) d'au moins un conducteur de flux (16A, 26A, 36A, 46A, 56A, 66A ; 16B, 26B, 36B, 46B, 56B, 66B) sont respectivement reliées entre elles par une portion de liaison (18A, 19A), notamment par une portion de liaison (18A, 19A) qui s'étend au moins partiellement parallèlement à l'axe central (Z).
